(19) Europäisches Patentamt
European Patent Office
Office européen des brevets

(11) **EP 3 823 811 B1**

(12) **EUROPÄISCHE PATENTSCHRIFT**

(45) Veröffentlichungstag und Bekanntmachung des Hinweises auf die Patenterteilung:
**08.11.2023 Patentblatt 2023/45**

(21) Anmeldenummer: **19749220.0**

(22) Anmeldetag: **17.07.2019**

(51) Internationale Patentklassifikation (IPC):
**B29C 64/106** (2017.01)  **B29C 64/124** (2017.01)
**B33Y 10/00** (2015.01)  **B33Y 70/00** (2020.01)

(52) Gemeinsame Patentklassifikation (CPC):
**B29C 64/106; B29C 64/124; B33Y 10/00; B33Y 70/00**

(86) Internationale Anmeldenummer:
**PCT/EP2019/069208**

(87) Internationale Veröffentlichungsnummer:
**WO 2020/016282 (23.01.2020 Gazette 2020/04)**

(54) **HERSTELLUNG VON FORMKÖRPERN AUS EINEM ANORGANISCH-ORGANISCHEN HYBRIDPOLYMER MIT HOHER AUFLÖSUNG MITTELS 3D-DRUCK, FORMKÖRPER MIT HOHEN BIEGEFESTIGKEITEN UND E-MODULN UND DEREN ANWENDUNG FÜR DENTALE ZWECKE**

PRODUCTION OF MOLDED BODIES FROM AN INORGANIC-ORGANIC HYBRID POLYMER WITH HIGH RESOLUTION USING 3D PRINTING, MOLDED BODIES WITH A HIGH FLEXURAL STRENGTH AND ELASTIC MODULUS, AND THE USE THEREOF FOR DENTAL PURPOSES

FABRICATION DE CORPS MOULÉS À PARTIR D'UN POLYMÈRE HYBRIDE INORGANIQUE-ORGANIQUE À HAUTE RÉSOLUTION PAR IMPRESSION 3D, CORPS MOULÉS À RÉSISTANCES ÉLEVÉES À LA FLEXION ET À MODULES D'ÉLASTICITÉ ÉLEVÉS AINSI QUE LEUR UTILISATION À DES FINS DENTAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2018 DE 102018117617**

(43) Veröffentlichungstag der Anmeldung:
**26.05.2021 Patentblatt 2021/21**

(73) Patentinhaber: **Fraunhofer-Gesellschaft zur Förderung der angewandten Forschung e.V.
80686 München (DE)**

(72) Erfinder:
- **WOLTER, Herbert
  97082 Würzburg (DE)**
- **KOLB, Carina
  97082 Würzburg (DE)**
- **HOFFMANN, Jeannette
  93051 Regensburg (DE)**

(74) Vertreter: **Strehl Schübel-Hopf & Partner
Maximilianstrasse 54
80538 München (DE)**

(56) Entgegenhaltungen:
**WO-A1-2016/134972     WO-A1-2018/058135
US-A1- 2018 066 115**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Herstellen von Formkörpern, die sich insbesondere zur Anwendung in der Zahntechnik und im sonstigen medizinischen Bereich eignen. Die Formkörper werden mit Hilfe eines schnellen Verfahrens unter Lichteinfluss gedruckt; sie basieren auf einem organisch vernetzten Kieselsäurepolykondensat, das je nach Bedarf weitere Zusätze enthalten kann. Die Erfindung betrifft auch Formkörper mit überlegenen mechanischen Eigenschaften.

Zähne sind nicht nur beim Kauen unerlässlich, sie spielen auch beim Sprechen eine wichtige Rolle und sind aus ästhetischen Gründen von großer Bedeutung. Zahnschäden durch Karies oder der teilweise bzw. gesamte Verlust von Zähnen häufen sich mit zunehmendem Alter. Diese potenzielle Patientengruppe höheren Alters steigt wegen der höheren Lebenserwartung zunehmend an. Daher ist es umso wichtiger, eine günstige und dennoch hochwertige Lösung für Zahnersatzmaterialien in Form von z. B. Kronen, Brücken und dergleichen sowie deren Herstellungsverfahren zu finden. Erwünscht ist eine unkomplizierte, automatisierte Fertigung in Verbindung mit einem hochästhetischen, belastungsstabilen Material.

Materialseitig sind für Zahnersatz bisher verschiedene Werkstofftypen wie Keramiken, Polymethyl-methacrylat (PMMA)-basierte Materialien und Metalle im Einsatz. Alle drei Typen zeigen jedoch signifikante Nachteile. Keramikzähne weisen ein sprödes Verhalten und damit eine hohe Frakturanfälligkeit auf. Weiterhin kann es wegen ihrer großen Härte zu Schädigungen des gegenüberliegenden Zahns kommen. PMMA ist wegen der Freisetzung von Restmonomeren aus Gründen der mangelnden Biokompatibilität bedenklich. Zudem zeigt dieses Material eine unzureichende Resistenz gegen Verschleiß. Schließlich können Metalle wie z. B. Gold vor allem mit ihrer Ästhetik nicht überzeugen. Als neue Werkstoffklasse für Zahnersatzmaterialien bieten sich hybride, kieselsäurebasierte Werkstoffe (ORMOCER®-basierte Komposite) als aussichtsreiche Alternative an. Diese besitzen einen geringeren Schrumpf als rein organische Materialien; gleichzeitig haben daraus hergestellte Formkörper überlegene mechanische Eigenschaften.

Neben der Anwendung im Dentalbereich für temporären und dauerhaften Zahnersatz, wie z. B. Kronen, Brücken, Inlays, Onlays, Overlays, Veneers, Prothesenbasis und Prothesenzähne und für Schienen (z. B. harte und weiche Aligner/kieferorthopädische Schienen, Aufbissschienen), Bohrschablonen, Zahnfleischmasken, finden sich weitere Ansatzpunkte für Verbesserungsbedarf überall dort, wo individuelle Bauteile oder Kleinserien mit hohen Anforderungen bzgl. mechanischer und tribologischer Eigenschaften und hoher Biokompatibilität benötigt werden, wie beispielsweise in vielen weiteren Bereichen im Medizinsektor. So wäre die erleichterte Herstellung verbesserter Träger für das Tissue Engineering z. B. für maßgeschneiderte Implantate oder in der Orthopädie, wünschenswert.

Eine zurzeit sehr geläufige Herstellmethode für Zahnersatz, wie z. B. Kronen und Brücken für die Endanwendung ist das CAD/CAM-Fräsen. Dabei wird aus einem vorgefertigten CAD/CAM-Block mittels einer CAD/CAM-Fräseinheit die gewünschte Geometrie herausgefräst. Diese subtraktive Herstellungsmethode weist allerdings den Nachteil auf, dass ein großer Teil des Materialblocks abgetragen werden muss, bis der Zahnersatz herausgefräst ist. Somit entsteht neben dem hohen Arbeitsaufwand auch ein großer Materialverlust, da das Material nicht wieder verwendet werden kann, weshalb die Materialkosten insgesamt steigen. Weiterhin können bestimmte Geometrien wie z. B. Hinterschneidungen nicht oder nur mit großem Aufwand realisiert werden. Dadurch kann es auch sein, dass gesundes Zahngewebe des Patienten entfernt werden muss, damit die gefräste Krone aufgesetzt werden kann. Zudem kann beim Fräsen immer nur ein Zahnteil auf einmal gefertigt werden, weshalb die Bearbeitung der jeweiligen Teile nacheinander erfolgen muss. Die CAD/CAM-Blöcke müssen außerdem im Vorfeld hergestellt werden, wofür derzeit Kompositmassen in entsprechende Blockformen vergossen werden. Hierzu ist eine geringe Viskosität der Materialien notwendig, welche mit einem geringen Füllstoffgehalt einhergeht. Dies führt wiederum zu ungenügenden mechanischen Eigenschaften. Für eine hohe Festigkeit mit hohem E-Modul und großer Abrasionsresistenz ist üblicherweise ein hoher Füllstoffgehalt und somit eine hohe Viskosität der Komposite verbunden. Diese knetbaren Komposite müssen dann häufig in aufwändiger Handarbeit, ggf. unter Pressen, in Form gebracht und danach ausgehärtet werden, wobei eine blasenfreie Formgebung nur schwer realisierbar ist. Eine weitere Möglichkeit besteht in der Fertigung von großen Kompositplatten, die nach der Härtung in die entsprechenden Blockformen gesägt werden müssen, was aufwändige mehrdimensionale Schnitte erfordert. Dies bedeutet zusätzliche Kosten für teure, schnell verschleißende Sägeblätter und den damit verbundenen erheblichen Materialverlust.

Ein alternativer Ansatz wird in der sogenannten Stereolithographie gesucht. Hierfür wird das zu verfestigende Material in flüssiger oder pastöser Form in ein Bad gebracht. Eine in z-Richtung bewegbare Plattform wird im Bad angebracht, derart, dass eine dünne Schicht des Badmaterials belichtet und verfestigt werden kann. Die Verfestigung erfolgt mit einem von einem Laser ausgehenden Lichtstrahl, der über den zu verfestigenden Bereich geführt wird. Anschließend wird die Plattform in z-Richtung verschoben (abgesenkt, wenn der Lichtstrahl von oben in das Bad gelenkt wird, angehoben, wenn durch den Badboden hindurch belichtet wird), so dass eine weitere Schicht mit dem Strahl belichtet werden kann. In DE 199 50 284 A1 werden verschiedene, organisch polymerisierbare Materialien als Grundmaterialien für dieses Verfahren vorgeschlagen, darunter auch Polysiloxane, wobei in dieser Anmeldung jedoch ausschließlich rein organische Grundmaterialien tatsächlich untersucht wurden.

Bei der sogenannten Digital Light Processing-Technologie (DLP), die zu den lithographiebasierten 3D-Druck-Prozessen zählt, werden Bauteile ausgehend von einem CAD-Datensatz als 3D-Geometriemodell schichtweise additiv hergestellt. Dabei werden photosensitive, Harzbasierte Materialien durch Maskenbelichtung flächig ausgehärtet, siehe DE 10 2014 116 402 A1, Seite 2. Durch die flächige Belichtung ist das Verfahren wesentlich schneller als die Stereolithographie. Auch wird bei der Herstellung für jede Schichtverfestigung dieselbe Zeit benötigt, unabhängig davon, wie deren Querschnitt relativ zu dem anderer Schichten ist.

Der 3D-Druck überwindet einige der genannten Nachteile. Vorteilhaft im Vergleich zur CAD/CAM-Technologie ist hierbei, dass es kaum Materialverlust gibt, da nicht ausgehärtetes Material wiederverwertbar ist. Weiterhin können komplexe Geometrien wie Hinterschneidungen oder Hohlräume einfach hergestellt werden, und nicht zuletzt ist es möglich, mehrere unterschiedliche, individuelle Bauteile simultan in einem Prozess zu drucken, wodurch Zeit gespart werden kann. US 2016/0332367 A1 beschreibt ein dreidimensionales Drucksystem zur schnellen Herstellung von (Dental-)Produkten. Als Ausgangsmaterialien dienen fließfähige Materialien auf rein organischer Basis. In EP 3 090 722 A1 werden durch Kettenübertragungspolymerisation härtbare Dentalmaterialien, ebenfalls auf rein organischer Basis, offenbart, die sich für den 3D-Druck eignen. Produkte, die mit Hilfe von Digital Light Processing hergestellt werden, sind auch bereits auf dem Markt. Dementsprechend steigt auch die Zahl der angebotenen, immer wieder verbesserten Drucker.

Der 3D-Druck wird unter anderem im folgenden Artikel näher erläutert: S. Ligon, R. Liska, J. Stampfl et al, Polymers for 3D Printing and Customized Additive Manufacturing, Chem. Rev. 2017, 117, 10212-10290.

Beim 3D-Druck und insbesondere beim Digital Light Processing besteht allerdings der Nachteil des sogenannten "overcuring". Darunter versteht man eine Überpolymerisation des zu härtenden Materials insbesondere in z-Achse, welche vor allem bei transluzenten Bauteilen auftritt und dazu führt, dass die Maßhaltigkeit nicht mehr gegeben ist. Dies tritt bei überhängenden und hinterschnittenen Teilen auf, da es keine Begrenzung mit einer darüber liegenden Schicht (z.B. beim DLP-Verfahren) oder einer darunter liegenden Schicht (z.B. bei der Stereolithographie) gibt.

In der letzten Zeit wurde die Entwicklung von verbesserten 3D-Druckern, welche ähnlich dem DLP-Prinzip funktionieren, sowie die Verbesserung von bestehenden DLP-Druckern beschleunigt. Hierbei spielt u.a. die Druckbarkeit von höherviskosen Materialien, z. B. mittels Rakelsystemen oder Foliensystemen sowie die Erhöhung der Druckgeschwindigkeit, z. B. mittels kontinuierlicher Belichtung durch Ausnutzung der Sauerstoffinhibierungsschicht von Materialien, eine Rolle. Für beides besitzen die erfindungsgemäß nutzbaren Materialien bestimmte Vorteile, sodass sie direkten Einsatz finden und/oder mit wenig Aufwand an die entsprechenden Druckerprinzipien angepasst werden können, sodass sie für die neuen Verfahren ebenso verwendet werden können.

Neben den Druckern selbst spielt für eine erfolgreiche Realisierung von individuellen Dentalbauteilen das Material eine mindestens genauso wichtige Rolle. Für den 3D-Druck mittels DLP-Prinzip werden Fotopolymere mit einer gewissen Fließfähigkeit benötigt, was wiederum einen nur geringen Füllstoffgehalt voraussetzt. Die Folge sind häufig ungenügende mechanische Eigenschaften, denn eine hohe Festigkeit und Abrasionsresistenz geht in der Regel mit einem hohen Füllstoffgehalt und somit einer hohen Viskosität der Komposite einher. Deshalb kann für dieses Druckverfahren nicht einfach auf konventionelle, für Zahnersatz geeignete Dentalkomposite zurückgegriffen werden. Bisher auf dem Markt existierende Harzsysteme mit ausreichend niedriger Viskosität besitzen keine ausreichenden mechanischen Eigenschaften für den dauerhaften Einsatz für z. B. Kronen und Brücken. Eine weitere Limitierung, welche es bisher nicht ermöglicht, 3D-gedruckte Bauteile für Langzeitanwendungen einzusetzen, ist die ungenügende Biokompatibilität. Bei den meisten der bekannten Materialien handelt es sich um ungefüllte Fotopolymere, die aufgrund der oben genannten Gründe nur für den kurzzeitigen Einsatz im Mund, wie z. B. für Bohrschablonen, Röntgenschablonen, AufbissSchienen oder temporäre Kronen und Brücken, geeignet sind. So ist bisher kein 3D-druckbares Material für die dauerhafte orale Anwendung mit hoher Belastung, wie z. B. für Kronen und Brücken, bekannt. Es fehlt also an einem Material, welches die mechanischen und biokompatiblen Defizite vollständig überwindet und für dauerhafte Versorgungen Einsatz finden kann.

Das WO2018058135 offenbart die stereolithografische additive Herstellung von 3D-Silikonobjekten aus Polysiloxanen mit einer oder zwei organischen polymerisierbaren Gruppen.

In der DE 10 2014 116 402 A1 wird die Verwendung radikalisch härtbarer Zusammensetzungen in generativen Fertigungsverfahren, vorzugsweise in der Stereolithographie und dem Digital Light Processing, offenbart, die neben weiteren Zusätzen substituierte kettenförmige und/oder zyklische und/oder in Käfigform vorliegende Polysiloxane mit mindestens 3 Siliziumatomen sowie mit radikalisch polymerisierbaren Gruppen substituierte Disiloxane aufweisen. Der Zusatz der Disiloxane wird vorgeschlagen, um einerseits die Viskosität des Ausgangsmaterials zu senken und andererseits die Genauigkeit im Aufbau der Formkörper zu verbessern. Gemessen wurde die Viskosität des eingesetzten Grundmaterials sowie Biegefestigkeit, Elastizitätsmodul und Schrumpfung und zwar teils an konventionell ausgehärteten Stäbchen, teils an durch 3D-Druck hergestellten Proben. Die Ergebnisse für einige der konventionell ausgehärteten Stäbchen wurde mit auf die gleiche Weise gefertigten Stäbchen verglichen, deren Material kein Disiloxan enthielt; es wurde festgestellt, dass der Zusatz der Disiloxane die Festigkeitswerte erhöhte. Entsprechende Versuche wurden jedoch nicht mit Proben durchgeführt, die durch 3D-Druck hergestellt worden waren.

Es ist daher die Aufgabe der Erfindung, die Nachteile des Stands der Technik zu überwinden und ein Verfahren bereitzustellen, mit dem sich die nötigen Anforderungen für dauerhafte dentale sowie weitere Anwendungen besser meistern lassen als bisher. Aufgabe der Erfindung ist weiterhin die Bereitstellung von Formkörpern, insbesondere solchen, die sich als vorwiegend dauerhaften Zahnersatz wie z. B. Kronen und Brücken eignen, mit verbesserten mechanischen Eigenschaften.

Gelöst wird die Aufgabe durch ein Verfahren, das einerseits durch den Einsatz eines mit Licht arbeitenden 3D-Druckverfahrens, vorzugsweise mittels Digital Light Processing, und andererseits durch die Verwendung von Harzsystemen gekennzeichnet ist, denen ein kondensiertes Silan-basiertes System zugrunde liegt und das vorzugsweise mit reaktiven C=C-Doppelbindungen enthaltenden Gruppen wie (Meth)Acryl- oder Norbornenyl-Gruppen und/oder mit ringöffnend-polymerisierbaren Gruppen funktionalisiert ist. Die Harzsysteme weisen eine für das Drucken ausreichend niedrige Viskosität auf; gleichzeitig lassen sich für den Dentalbereich einsetzbare Formkörper erzeugen, die insbesondere gegenüber gegossenen und nachbearbeiteten Formkörpern verbesserte Festigkeiten haben.

Die Erfinder der vorliegenden Erfindung konnten anhand von konkreten Untersuchungen mit Hilfe von Digital Light Processing feststellen, dass es des Zusatzes von Disiloxanen für das Badmaterial wie in der DE 10 2014 116 402 A1 beschrieben gar nicht bedarf, um überragende Eigenschaften der so hergestellten Formkörper zu erhalten. Überraschend stellte sich stattdessen heraus, dass gerade der Einsatz des Druckprozesses zu einer substantiellen Verbesserung der mechanischen Werte von aus Silanharzen erzeugten Formkörpern führt, verglichen mit einer zweiseitigen Belichtung der ganzen, in einer Form befindlichen Körper nach klassischer Herstellung. Auf die relativ aufwendige Herstellung und die Beigabe eines zusätzlich beizugebenden Disiloxans kann nach den Erkenntnissen der Erfinder der vorliegenden Erfindung daher nicht nur verzichtet werden, sondern ihr Fehlen führt - entgegen den in der genannten Anmeldung angesprochenen Erwartungen - sogar zu Formkörpern mit überlegenen mechanischen Eigenschaften.

Die Figuren erläutern die Erfindung, wobei:

Fig. 1 Details zur Bestimmung der fehlerhaften Durchpolymerisation (FD) anhand einer Brücke als Prüfkörper veranschaulicht,

Fig. 2 den Druck eines solchen Bauteils und die Entstehung der FD veranschaulicht,

Fig. 3 die Herstellung von Stäbchen verschiedener Ausrichtung mittels der erfindungsgemäßen Technik und die teils damit verbundene Problematik der FD veranschaulicht,

Fig. 4 graphisch den Einfluss des Zusatzes von DHDMBP zu erfindungsgemäß einsetzbaren Ausgangsmaterialien zeigt,

Fig. 5 verschiedene mit dem erfindungsgemäßen Verfahren hergestellte Formkörper zeigt, aufgenommen mit einem Fotoapparat, und

Fig. 6 schematisch einen Prüfkörper mit Abschnitten A und B für die FD zeigt.

Der Ausdruck "Druckverfahren nach der Technik des Ein-Photonen-Polymerisations-Prozesses" soll klarstellen, dass das Material im erfindungsgemäßen Verfahren nicht nach der 2-Photonen-Polymerisations-Technik (2PP oder TPA) polymerisiert wird. Es wird erfindungsgemäß also mit Licht-Wellenlängen und Intensitäten gearbeitet, die nicht ausreichen, um Zwei-Photonen-Polymerisationsprozesse in Gang zu setzen, so dass die Erfindung also explizit nicht auf die Herstellung von Formkörpern mit Hilfe von 2- oder Mehrphotonenpolymerisation (TPA) gerichtet ist und dieses Verfahren vom Schutzumfang ausgeschlossen sein soll. Das TPA-Strukturierungsverfahren unterscheidet sich grundlegend vom Verfahren, das erfindungsgemäß genutzt werden soll, da es eine Verfestigung eines beliebigen Raumelements ("Voxel") innerhalb des Bades ermöglicht, ohne dass der Belichtungsstrahl auf seinem Weg zu diesem Element das Material, das er durchdringt, verfestigen würde. Hierfür benötigt man im Vergleich zur Ein-Photonen-Polymerisation Strahlung der doppelten Wellenlänge. Während dies ein großer Vorteil für eine Reihe von Anwendungen ist, hat es doch den Nachteil, dass sich mit der TPA nur sehr kleine Bereiche auf einmal verfestigen lassen, weil der Belichtungsstrahl wie ein Schreibstrahl seriell über die zu verfestigenden Bereiche geführt werden muss, was eine sehr schnelle Arbeitsweise ausschließt.

Die vorliegende Erfindung nutzt ein Verfahren, bei dem der Körper durch Verfestigung eines flüssigen oder viskosen Materials erzeugt wird, wobei die Verfestigung dadurch erfolgt, dass Licht einer Strahlungsquelle auf einen Bereich einer Oberfläche eines Substrats gerichtet wird, wobei sich dort eine Schicht des flüssigen oder viskosen Materials befindet, die durch die Einwirkung von Strahlung dieser Strahlungsquelle einer organischen Polymerisation unterworfen und dadurch verfestigt wird, worauf nacheinander weitere Schichten des flüssigen oder viskosen Materials, die sich jeweils auf der Schicht des zuletzt verfestigten Materials befinden, mit Hilfe dieser Strahlungsquelle verfestigt werden.

Das "Licht einer Strahlungsquelle", wie vorliegend definiert, muss nicht notwendigerweise im sichtbaren Bereich liegen. So soll beispielsweise UV-Licht von diesem Begriff mitumfasst sein.

Schichten, die sich "auf der Schicht des zuletzt verfestigten Materials befinden", befinden sich auf dieser in Richtung der Strahlungsquelle gesehen. Wird z.B. das Substrat in einem Bad angeordnet, und die Substratoberfläche wird durch einen für das Licht der Strahlungsquelle durchlässigen Boden des Badbehälters bestrahlt, befinden sich die jeweils zu verfestigenden Schichten des flüssigen oder viskosen Materials unterhalb des Substrates samt den darauf bereits verfestigten Schichten.

Erfindungsgemäß können alle Techniken genutzt werden, die von einem flüssigen oder viskosen ("pastösen"), also fließfähigen Material ausgehen, das sich durch Lichteinwirkung ortsselektiv verfestigen lässt. Jede Schicht wird dabei flächig, d.h. in der Regel mit einem festen Betrag in z-Richtung und mit beliebigem Umriss der jeweiligen Schicht in x-y-Richtung belichtet. Dabei kann die jeweilige Fläche / können die jeweiligen Flächen jeder Schicht simultan belichtet werden (dann handelt es sich um eine flächige Belichtung), oder sie wird/werden mit einem Strahl abgerastert (der gesamte Flächenbereich wird dann nicht gleichzeitig, sondern in schmalen Streifen der Belichtung ausgesetzt). Diese Technik wird als "Drucktechnik" bezeichnet; sie gehört zur Gruppe der 3D-Druck-Verfahren.

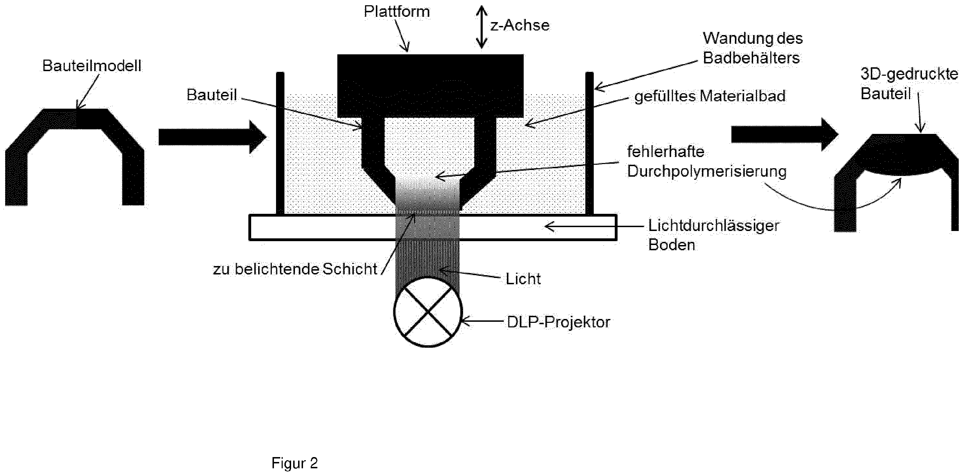

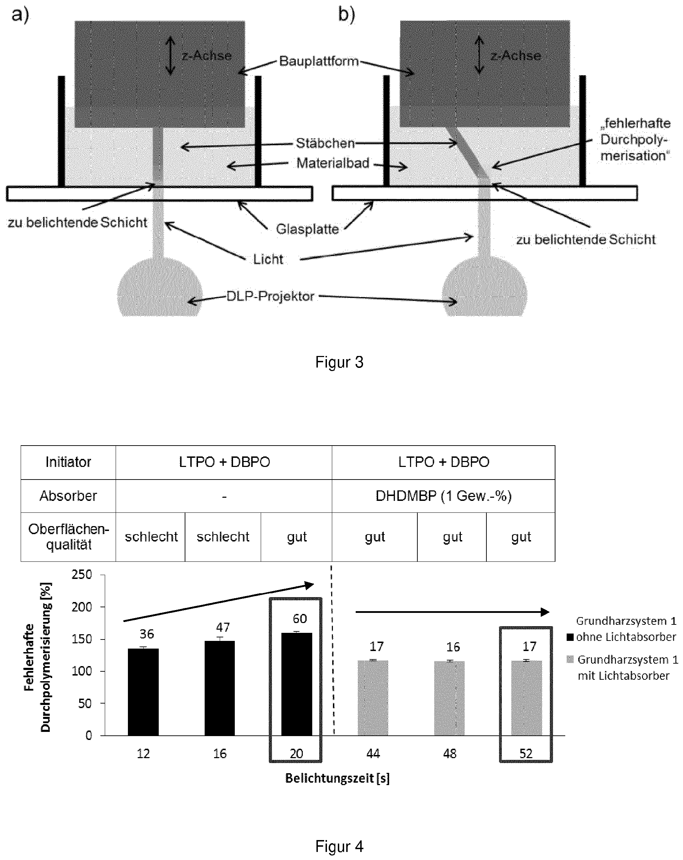

Insbesondere eignet sich erfindungsgemäß das sogenannte DLP (Digital Light Processing) für die Herstellung der Formkörper. Dabei handelt es sich um ein materialsparendes, automatisiertes und somit schnelles und kostengünstiges Verfahren, bei welchem sich das Material im Inneren eines Bades, d.h. in einem Badbehälter, befindet. Hierbei ist ein in z-Richtung bewegbares Substrat in Form einer Plattform im Bad angebracht, derart, dass sich zwischen dem Boden des Badbehälters und der nach unten gerichteten Oberfläche der Plattform bzw. der bereits verfestigten Schichten jeweils eine dünne Schicht des Badmaterials befindet, die belichtet und verfestigt werden kann, worauf die Plattform bewegt und dabei letztendlich um eine Schichtstärke in z-Richtung nach oben gezogen wird, so dass Badmaterial in den entstehenden Spalt nachströmt. Jede verfestigte Schicht hat in z-Richtung eine in der Regel gleichbleibende Mächtigkeit, die allerdings unter Umständen infinitesimal klein sein kann, wie nachstehend näher erläutert. In x-y-Richtung kann sie jedoch eine beliebige Form (auch mehrteilig) bzw. einen beliebigen Umriss besitzen, wodurch der erzeugte Formkörper auch z.B. Hinterschneidungen oder einzelne Säulen aufweisen kann. Auch können mehrere einzelne Formkörper gleichzeitig ausgebildet werden. Die Verfestigung am Badboden gelingt dadurch, dass das Badmaterial durch den lichtdurchlässigen Boden (oder einen lichtdurchlässigen Teil davon) oder eine lichtdurchlässige Wandung des Badbehälters hindurch bestrahlt wird. Dabei kann entweder ein Schreibstrahl verwendet werden, so dass einzelne Partien der Fläche "abgerastert", d.h. in schmalen Streifen nacheinander belichtet werden, oder die Belichtung kann auf einmal (simultan) über die ganze Fläche erfolgen, die damit gleichzeitig belichtet wird. Letzteres ist bevorzugt, weil die Flächenbelichtung wesentlich schneller ist. Als Belichtungswellenlängen dienen solche, mit denen sich eine Ein-Photonen-Polymerisationsreaktion bewirken lässt, z.B. im Bereich von 320 - 480 nm. Beispielhafte Skizzen zur Erläuterung des Belichtungsweges und der Plattformbewegung können den Figuren 2 und 3 entnommen werden.

Der eingesetzte DLP-Drucker kann ein Vibrationssystem aufweisen, das eine periodische Anregung der Materialwanne ermöglicht. Dabei sind Frequenzen von bevorzugt 100 Hz bis 40 kHz möglich. Die Anregung kann beispielsweise pulsierend oder im Intervallmodus erfolgen. Dadurch wird die Viskosität bei Einsatz von nichtnewtonschen Materialsystemen herabgesetzt. Diese Systeme können insbesondere für Komposite mit höherem Füllstoffgehalt nützlich sein.

Der in der vorliegenden Erfindung eingesetzte DLP-Drucker kann zusätzlich ein modifiziertes Wannensystem mit translatorischer Verschiebemöglichkeit aufweisen, z. B. eine Wanne mit mehreren Kammern, beispielsweise eine Dreikammernwanne. Eine Mehrkammernwanne kann zur alternierenden Verwendung unterschiedlicher Druckmaterialien bzw. Nutzung einer Wanne zum Waschen der Bauteile vor Materialwechsel eingesetzt werden.

Das erfindungsgemäße Verfahren kann dann folgende Merkmale aufweisen:

Verfahren zum Herstellen eines Formkörpers mit Hilfe eines strahlungsinduzierten Druckverfahrens mit den folgenden Schritten in der angegebenen Reihenfolge:

Schichtaufbauschritt in einer Wanne 1:

- Bereitstellen eines Substrats,
- Bereitstellen eines in der vorliegenden Erfindung beschriebenen fließfähigen Ausgangsmaterials,
- Bereistellen eines Bades, worin das Substrat in das fließfähige Ausgangsmaterial eingetaucht ist,
- Verfestigen des fließfähigen Ausgangsmaterials auf der Oberfläche des Substrats unter Erzeugung eines beschichteten Substrats,
- Entnahme des beschichteten Substrats;

Waschschritt in einer Wanne 2:

- Bereitstellen des beschichteten Substrats,
- Waschen des beschichteten Substrats, optional unter Eisatz eines Vibrationsystems für effektivere Reinigung, und
- Entnahme des gewaschenen beschichteten Substrats.

Anschließend kann das gewaschene beschichtete Substrat als das Substrat in einem weiteren Schichtaufbauschritt in der Wanne 1 eingesetzt werden. Alternativ dazu kann das gewaschene beschichtete Substrat als das Substrat in einem Schichtaufbauschritt in einer Wanne 3 eingesetzt werden, wobei sich die fließfähigen Ausgangsmaterialien in der Wanne 3 und der Wanne 1 voneinander unterscheiden. Für weitere Schichtaufbauschritte können weitere Wannen mit anderen fließfähigen Ausgangsmaterialien eingesetzt werden.

Der Zyklus aus Schichtaufbauschritt und Waschschritt kann bis zur Bildung des gewünschten Formkörpers wiederholt werden.

In einer bevorzugten Ausführungsform weist der DLP-Drucker ein Vibrationssystem sowie mindestens zwei Wannen auf, wobei mindestens eine Wanne so ausgestaltet ist, dass sie zur Durchführung eines Schichtaufbauschritts geeignet ist, und mindestens eine Wanne so ausgestaltet ist, dass sie zur Durchführung eines Waschschritts geeignet ist.

Zudem kann ein Materialzuführungssystem eingesetzt werden, das einen Mehrkomponentendruck mit einem Gradienten in z-Richtung ermöglicht. Es kann ein System zur Temperierung des Druckmaterials bevorzugt bis zu 70 °C eingesetzt werden, um die Viskosität, insbesondere bei Kompositen mit höherem Füllstoffgehalt, herabzusetzen. Für hochaufgelöste Bauteile kann eine Pixelgröße von 39 bis 63 $\mu$m, bevorzugt von 20 bis 30 $\mu$m, verwendet werden.

Bei Einsatz einer Einkammernwanne kann ein Rakelsystem verwendet werden, um die Verteilung des Druckmaterials, insbesondere bei hochviskosen Systemen, zu verbessern.

Der DLP-Drucker und das Druckverfahren können folgende Merkmale aufweisen: Wellenlänge: 280 bis 800 nm, bevorzugt etwa 385 nm oder etwa 405 nm; Bestrahlungsstärke: 0,6 - 40 mW/cm$^2$; Vat Deflection Feedback System: Lasersensorik zur Überwachung des Druckprozesses; Wanne aus optischem hochtransparentem Silikon für höchste Präzision + Wanne mit Glas-/Folienkombination für hochviskose Materialien; Schichtstärken: 10 - 300 $\mu$m; Aufzeichnung der Sensor-Messdaten; Aufbringung eines Substrats auf den Stempel möglich.

Eine Weiterentwicklung des DLP-Verfahrens ist das sogenannte CLIP-Verfahren (Continuous Liquid Interface Production). Hierbei ist der Badboden, durch den die Strahlung der Belichtungsquelle fällt, bevorzugt sauerstoffdurchlässig. Dadurch wird die Polymerisation in unmittelbarer Nähe des Badbodens (in der Regel hat die sauerstoffinhibierende, bodenangrenzende Schicht eine Stärke von ca. 20-30 $\mu$m) unterbunden, und es entfällt der bei der DLP sonst notwendige, separate und relativ zeitaufwändige Schritt des kontrollierten Nachfließens von flüssigem/viskosem Material in den schmalen Spalt, der jeweils für die Polymerisation der nächsten Schicht vorgesehen ist. Die Belichtung kann daher kontinuierlich erfolgen, während die Plattform kontinuierlich nach oben (in z-Richtung) gezogen wird. Das hat natürlich zur Folge, dass keine einzelnen Schichten mit in z-Richtung messbarer Stärke gebildet werden. Dennoch ist das Verfahren eine Variante des Druckens in Schichten, da die Verfestigung in jeder x-y-Ebene gleichzeitig erfolgt. Der Ausdruck "Schicht" soll in diesem Sinne erfindungsgemäß daher auch Schichten mit infinitesimal geringer Stärke umfassen.

Ganz allgemein werden erfindungsgemäß Druckverfahren bevorzugt eingesetzt, bei denen der Druck innerhalb eines Bades des zu verfestigenden Materials erfolgt. Unter diesen werden das vorgenannte DLP-Verfahren einschließlich der CLIP-Variante besonders bevorzugt genutzt. Dabei sind beide, das DLP-Verfahren wie auch die CLIP-Variante, jeweils mit allen nachstehend aufgeführten, andere Aspekte betreffenden Ausführungsformen der Erfindung kombinierbar.

Ein weiteres Beispiel für den 3D-Druck ist die Stereolithographie (SLA) im engeren Sinn, bei der die Bildung des Formkörpers dadurch erfolgt, dass ein Träger kurz unter der Oberfläche eines Bades oder, alternativ, in der Nähe eines lichtdurchlässigen Badbodens angeordnet wird, derart, dass nur eine dünne Schicht Material darüber/darunter liegt. Diese wird mit Hilfe eines Lasers gemäß einer zuvor erarbeiteten digitalen Form verfestigt (abgerastert), worauf der Träger soweit abgesenkt/angehoben wird, dass die verfestigte Schicht von einer weiteren flüssigen Schicht überzogen wird bzw. dass eine weitere flüssige Schicht zwischen die verfestigte Schicht und den Badboden gelangt. Diese Schicht wird daraufhin ebenfalls mit dem Laserstrahl verfestigt. Jede Schicht hat in z-Richtung eine feste Dicke (Mächtigkeit), kann in x-y-Richtung jedoch eine beliebige Form besitzen, wodurch ein Formkörper auch z.B. mit Hinterschneidungen erzeugt werden kann. Weitere erfindungsgemäß einsetzbare Verfahren sind die sog. $\mu$-Stereolithographie ($\mu$-SLA), Multi Jet Modelling (MJM) und Poly Jet Printing (PJP) sowie Variationen einiger dieser Verfahren, bei denen z.B. mit Rakelsystemen gearbeitet wird, z.B. das Lithography-based Ceramic Manufacturing (LCM), oder bei denen z.B. mit Foliensystemen gearbeitet wird, z.B. das Film Transfer Imaging (FTI) (z. B. Admaflex Technology), oder weitere Verfahrensvariationen, wie z.B. das TwoCure-Verfahren oder die Mask Stereolithography (MSLA). Für das MJM und PJP wird ein flüssiges, lichtempfindliches Material über einen Druckkopf schichtweise auf eine Plattform aufgetragen, und jeder abgelegte Strang (der im Sinne der Erfindung als Bestandteil einer Schicht anzusehen ist) wird durch eine z.B. im Druckkopf integrierte Lichtquelle sofort ausgehärtet. (Das ist ein Beispiel für eine Technik, bei der die jeweilige Schicht nicht gleichzeitig, sondern in schmalen Streifen der Belichtung ausgesetzt wird, was dem oben erwähnten "Abrastern" entspricht.) Zur Herstellung überhängender Strukturen werden mittels mehrerer Druckköpfe Supportstrukturen erzeugt, die nach dem Druck mechanisch entfernt oder ausgewaschen werden müssen. Beim Film Transfer Imaging Verfahren wird das lichtempfindliche Material über eine Transportfolie auf eine Plattform aufgetragen und z.B. schichtweise mittels Projektor ausgehärtet. Dieses Verfahren ist speziell für hochviskose Materialien geeignet. Gleiches gilt für das Film Transfer Imaging nach der Admaflex Technologie, bei dem das zu verfestigende Material ebenfalls über eine Folie zugeführt wird. Das LCM dagegen arbeitet mit einer Rakel. Dabei dreht sich die Materialwanne nach jeder Schichtverfestigung im Kreis, so dass mit der Rakel neues Material auf dem Boden der Wanne aufgetragen wird. Ansonsten besteht große Ähnlichkeit mit dem DLP-Prinzip. Auch für dieses Verfahren sind höherviskose Materialien günstig. Das TwoCure-Verfahren nutzt neben der photochemischen Vernetzung eine Verfestigung mit Kälte. Kaltes, wachsartiges, aber nicht chemisch verfestigtes Material, welches als Support dient, kann anschließend nach dem Druck bei Raumtemperatur verflüssigt werden. Schließlich sei auch noch die Masken-Stereolithographie genannt, bei der wie beim DLP eine Bauplattform in ein Materialbad hineinragt und die Bestrahlung von unten durch den strahlungsdurchlässigen Badboden hindurch erfolgt. Im Unterschied zum DLP wird das Belichtungsfeld jedoch nicht mit einem DLP-Chip generiert, sondern mit einer Flüssigkristall-Belichtungsmaske.

Wird für das erfindungsgemäße Verfahren die DLP-Technik eingesetzt, so wird das Material im Inneren des Bades verfestigt, so dass Oberflächeneffekte wie eine durch Sauerstoff verursachte Inhibierung der Polymerisationsreaktion vermieden werden können. Auch wird ein geringerer Materialvorrat benötigt im Vergleich zu Systemen, bei denen die Bauplattform ins Materialbad hineinfährt und von oben belichtet wird. Bei der letztgenannten Technik wird außerdem häufig ein Wischer oder Rakel benötigt, um eine glatte Oberfläche zu erzeugen.

Unter dem Ausdruck "Vielzahl von Schichten" ist zu verstehen, dass der Formkörper erfindungsgemäß aus sehr vielen Schichten (theoretisch sogar unendlich vielen, sofern das CLIP-Verfahren angewendet wird) aufgebaut ist. Die tatsächliche Zahl hängt von der Struktur und Größe des Formkörpers und der gewählten Schichtstärke ab; Die Schichtstärke variiert in der Regel zwischen 10 und 150 $\mu$m, kann ggf. aber auch noch geringer gewählt werden. Die Größe der Formkörper wird in der Regel im mm-Bereich oder cm-Bereich liegen, wobei Abweichungen nach unten oder oben möglich sind.

Die Ausdrücke "Formkörper", "Körper" und "Bauteil" werden vorliegend synonym verwendet.

Die Ausdrücke "Schichtstärke" und "Schichtdicke" werden vorliegend synonym verwendet.

Die Ausdrücke "Matrix", "Harzmatrix" und "Matrixsystem" werden vorliegend synonym verwendet.

Die Ausdrücke "Absorber", "Lichtabsorber", "Photoabsorber" und "UV-Absorber" werden vorliegend synonym verwendet.

Die Ausdrücke "3D-Druckverfahren" und "3D-Verfahren" werden vorliegend synonym verwendet.

Unter "flüssigem oder viskosem Material" versteht die Erfindung ein Material, das in jedem Fall noch fließfähig ist. Die Fließfähigkeit kann allerdings ggf. auch relativ gering sein.

Der Ausdruck "(Meth-)Acryl" soll Acryl und Methacryl umfassen.

Das erfindungsgemäße Verfahren nutzt Materialformulierungen in flüssiger oder viskoser Form, welche eine Polysiloxan-Komponente (ein kondensiertes Silan-basiertes System, auch als Kieselsäurepolykondensat oder, bei Anwesenheit weiterer Heteroelemente, Kieselsäureheteropolykondensat bezeichnet) auf Basis monomerer, zwei oder drei hydrolysierbare Gruppen aufweisender Silane enthält. Die Silane sind mit Gruppen funktionalisiert, die unter Lichteinfluss untereinander polymerisieren können, beispielsweise mit (Meth)Acryl- oder cycloolefinischen Gruppen, wie z.B. Norbornenyl-Gruppen oder mit Ringen, die sich bei einer lichtinduzierten Polymerisationsreaktion öffnen, wie z. B. in DE 4011044, DE 19627198, DE 19910895, DE 10349766.8, DE 102005018059, DE 4125201.2, DE 4125201.2, DE 102011054440 A1, DE 102011053865 A1, DE 102012109685 A1, DE 102013108594 und DE 10201415751 A1 offenbart. Die erfindungsgemäß einsetzbare Polysiloxan-Komponente kann ggf. zusätzlich weitere Gruppen enthalten, die z.B. durch den Einbau entsprechender, ggf. zusätzlicher Silane gewonnen wurden. Ein Beispiel hierfür ist die Gegenwart von Aryl-Gruppen, deren Effekt weiter unten beschrieben wird. Wie aus DE 102013108594 bekannt, lassen sich diese z.B. dadurch einbauen, dass ein Teil der (Meth)Acrylgruppen eines entsprechenden Silanharzes mit einer Thioarylverbindung wie Thiophenol umgesetzt wird. Ein weiteres Beispiel ist die Gegenwart von phosphorhaltigen Gruppen wie Phosphonsäure-, Phosphinsäure-oder Phosphat-Gruppen an über Kohlenstoff an Siliciumatome gebundenen Resten. Diese sind beispielsweise aus DE 10111955 bekannt. Es ist möglich, dass sich eine solche Gruppe (oder mehrere davon) an einem über Kohlenstoff an Silicium gebundenen Rest befindet, der auch eine oder mehrere Acrylat- und/oder Methacrylatgruppen trägt, siehe die genannte Druckschrift. Eine weitere Alternative ist die Gegenwart von oxidierten schwefelhaltigen Gruppen wie Sulfinat-, Sulfonat- oder Sulfatgruppen bzw. der entsprechenden Säuren an einem über Kohlenstoff an Silicium gebundenen Rest. Diesbezüglich kann auf DE 102011050672 verwiesen werden. Es ist möglich, dass sich alle genannten Gruppen an einem über Kohlenstoff am Silicium gebundenen Rest befinden, der zusätzlich andere reaktive Gruppen trägt. Beispiele sind Acrylat-, Methacrylat-, Carbonsäure- oder Hydroxygruppen. Erfindungsgemäß ist es möglich, ein Harzsystem einzusetzen, das entweder Arylgruppen oder phosphorhaltige Gruppen oder oxidierte schwefelhaltige Gruppen wie oben definiert enthält. Es können aber auch Kombinationen aus zwei der drei Möglichkeiten oder eine Kombination aus allen drei Möglichkeiten genutzt werden. Die Effekte, die sich aus den jeweiligen Zusätzen bzw. der Kombination mehrerer Zusätze ergibt, sind weiter unten beschrieben.

Den erfindungsgemäß einsetzbaren Kieselsäurepolykondensaten dürfen jedoch keine Silane zugrunde liegen, welche mit Gruppen funktionalisiert sind, die unter Strahlungseinfluss untereinander polymerisieren können, wie oben definiert, und die nur eine hydrolysierbare Gruppe aufweisen.

Das durch organische Polymerisation verfestigte Material der vorliegenden Erfindung wird vorliegend häufig auch als "Hybridpolymer" bezeichnet, um auszudrücken, dass es sowohl anorganisch - über Si-O-Si-Brücken - als auch organisch - durch die Polymerisation der polymerisierbaren Gruppen - vernetzt ist.

Neben Silicium können die Hybridpolymere bzw. die entsprechenden Ausgangsmaterialen, d.h. die Polysiloxan-Komponente bzw. das Kieselsäure(hetero)polykondensat in geringerem Umfang Heteroelemente wie B, Al, Zr, Zn, Ti und dergleichen enthalten, wie aus dem Stand der Technik bekannt. Diese lassen sich durch Zusatz z.B. der entsprechenden Alkoxide in das Polykondensat einarbeiten. Der Ausdruck "Kieselsäure(hetero)polykondensat" soll sowohl Kieselsäurepolykondensate (mit oder ohne fremde Heteroelemente) als auch Kieselsäureheteropolykondensate, die fremde Heteroelemente enthalten, umfassen.

Auch der Zusatz von rein organischen Vernetzern, die mit den polymerisierberen Gruppen copolymerisieren oder sich daran addieren können, ist nicht ausgeschlossen, ist aber in der Regel nicht vorgesehen. Weiterhin umfassen diese Materialformulierungen je nach Bedarf Additive, die beim Einsatz von auf dem Prinzip der Lichthärtung von Materialien beruhenden 3D-Druck-Technologien, insbesondere dem Digital Light Processing-Prinzip (DLP), für die Formgebung benötigt werden, insbesondere einen Initiator für die strahlungsinduzierte Polymerisationsreaktion. Weitere Additive können je nach Bedarf zugegeben werden.

Weiter enthalten sein können anorganische, organische wie auch Hybridpolymer-basierte Füllstoffe. Mischungen, die zumindest anorganisch-organische Hybridpolymere und Füllstoffe enthalten, werden auch als Komposite bezeichnet. Die Polysiloxan-Komponente und die darin gelösten Verbindungen fungieren hierin als Matrix, in der die Füllstoffe dispergiert vorliegen. Bei den Füllstoffen kann es sich um Primärpartikel im Nanometerbereich handeln, die, wie die Erfindung weiter unten erläutert, je nach Bedarf zu größeren Partikeln agglomeriert oder (vollständig) dispergiert vorliegen können und überraschende Effekte zeigen, wie z.B. die Modifizierung der Brechzahl des Matrixsystems. Stattdessen oder zusätzlich können größere Partikel zugesetzt werden, um z.B. die mechanischen und tribologischen Eigenschaften zu modifizieren. Bevorzugt sind anorganische splitterförmige oder sphärische Füllstoffe, aber auch faserförmige Füller können genutzt werden. Als splitterförmige Füllstoffe sind dentale Glaspulver mit Partikelgrößen zwischen 0,18 $\mu$m und 5 $\mu$m besonders bevorzugt. Als sphärische Füllstoffe sind $SiO_2$-, $TiO_2$-, ZnO-, ZnS- und $ZrO_2$-Nanopartikel mit Partikelgrößen zwischen 5 nm und 100 nm besonders bevorzugt. Beispiele für Füllstoffe, welche zum Einsatz kommen können, sind auch in EP 3 090 722 A1 (s. S. 9 und 10) sowie in DE 1964378, DE 10018405, DE 102011053865 A1 und DE 102005061965.7 beschrieben. Zur Verbesserung des Verbundes zwischen den Füllstoffpartikeln und der vernetzten Matrix können die Füllstoffe in einer ersten Variante der Komposite oberflächenmodifiziert sein. Vorzugsweise trägt die Oberflächenmodifizierung Gruppen, die in das organische Netzwerk des Kieselsäurepolykondensats einpolymerisiert werden können. Ein Beispiel ist die Oberflächenmodifizierung mit Methacryloxypropyltrimethoxysilan, siehe EP 3 090 722 A1 (S. 10), wenn die Polysiloxan-Komponente des Badmaterials Methacrylgruppen oder sonstige, mit Methacrylgruppen copolymerisierbare Gruppen als organisch polymerisierbare Reste aufweist. Durch die Oberflächenmodifizierung wird eine verbesserte Dispersion der Teilchen bewirkt. Handelt es sich um Nanopartikel (unterhalb einer bestimmten Partikelgröße), dann wirken diese nicht mehr lichtstreuend, sondern modifizieren den Brechungsindex der Matrix, deren Bestandteil sie geworden sind. In einer zweiten Variante der Komposite wird eine Polysiloxan-Komponente in der Matrix eingesetzt, die Phosphonsäure-, Phosphinsäure-, Sulfonsäure-, Sulfinsäure- oder Carbonsäuregruppen (oder Mischungen davon) enthält, wie oben erwähnt. Durch die genannten Säurefunktionen werden auch sehr kleine, nicht-oberflächenmodifizierte Partikel in dispergierter Form in der Harzmatrix stabilisiert. Hierfür sind nur geringe Mengen der genannten Gruppen erforderlich.

Die Materialformulierungen werden für das erfindungsgemäße Verfahren in fließfähigem Zustand eingesetzt. Werden Komposite genutzt, hat sich erfindungsgemäß gezeigt, dass deren Füllstoffe in Anteilen von bis zu 60 Gew.-% oder sogar darüber hinaus vorliegen können, ohne dass die Verfahrensführung substantiell beeinträchtig wäre. Denn die Erfindung konnte zeigen, dass sich auch diese Komposite ohne Probleme in zumindest für einige der einsetzbaren Druckverfahren fließfähige Form bringen lassen, so dass sie für die erfindungsgemäß einzusetzende Formgebungsmethode geeignet sind.

Wie bereits erwähnt, enthalten die Materialformulierungen mindestens ein geeignetes Additiv für die Initiierung der radikalischen Photopolymerisation durch Licht. Beispiele für geeignete Zusätze sind Phosphinoxide. Besonders bevorzugt wird 2,4,6-Trimethylbenzoyldiphenylphosphinoxid (LTPO) eingesetzt. Phosphinoxide wie 2,4,6-Trimethylbenzoyldiphenylphosphinoxid haben gegenüber anderen Initiatoren wie DL-Campherchinon den Vorteil, auf den Zusatz eines Aminaktivators wie 4-Dimethylaminobenzoesäureethylester verzichten zu können. Das System ist außerdem nicht gelblich.

Vorteilhaft lassen sich auch Mischungen verschiedener Initiatoren einsetzen. Beispiele für solche Initiatoren finden sich in EP 3 090 722 A1.

Nach dem 3D-Druck können Nachbearbeitungsschritte erfolgen, beispielsweise das Waschen der Bauteile mit Lösemittel, bevorzugt Isopropanol, im Ultraschallbad sowie das Nachhärten, beispielsweise thermisch oder photoinduziert.

Soll der 3D-gedruckte Formkörper anschließend durch Wärme nachgehärtet werden, empfiehlt sich weiterhin ein geeigneter Zusatz für die Initiation der zusätzlichen thermischen Polymerisation, wobei der Photoinitiator bei der Vorvernetzung während des 3D-Drucks zum Einsatz kommt und der thermische Initiator im Anschluss bei der thermischen Nachhärtung. Diese kann z.B. im Ofen und/oder mittels IR-Strahler und/oder Mikrowelle erfolgen. Als thermische Radikalinitiatoren können Peroxide wie Dibenzoylperoxid (DBPO) genutzt werden. Auch kann bei Bedarf eine Kombination von verschiedenen Photoinitiatoren genutzt werden, welche bei unterschiedlichen Wellenlängen ihr Absorptionsmaximum haben. Möglich ist auch eine Nachhärtung ebenfalls mit Licht, wobei die Verwendung zweier Photoinitiatoren günstig ist, deren Absorptionsbereiche so abgestimmt sind, dass der eine Photoinitiator während des 3D-Drucks spaltet und der zweite bei der Nachhärtung mit Licht einer bestimmter Wellenlänge, die von der Emissions-Wellenlänge der LED des Druckers abweicht. Ein Beispiel für eine solche Kombination ist die Verwendung von LTPO als Initiator für den 3D-Druck (wirksam ab ca. 420/410 nm und darunter) und Campherchinon, das in einem Wellenlängenbereich von ca. 400-500 nm wirksam ist, für die Nachhärtung. Alternativ kann als zweiter Initiator für die Nachhärtung ein UV-Initiator eingesetzt werden. Die Nachhärtung mit Licht kann photoinitiiert z.B. mit Blitzlichtgerät (z.B. G 171 Otoflash von NK Optik, Baierbrunn (D)) (optional unter Schutzgas) und/oder Spectramat (z.B. einem dentalen Lichtofen von Ivoclar, Schaan (Lichtenstein)) und/oder Dentalstrahler (Polofil® Lux der Fa. Voco GmbH, Cuxhaven) und/oder hochintensivem LED-Punktstrahler (Bluepoint LED eco von Hönle, Gräfelfing/München) erfolgen.

Die Erfinder konnten feststellen, dass die mechanischen Eigenschaften der 3D-gedruckten Formkörper besser waren als diejenigen von Formkörpern, die mit Hilfe konventioneller Herstellung per Formguss und Belichtung mit einem Dentalstrahler (Polofil® Lux der Fa. Voco GmbH, Cuxhaven) hergestellt worden waren. Überraschenderweise hat sich herausgestellt, dass mit dem erfindungsgemäßen Verfahren hergestellte Formkörper eine Biegefestigkeit besitzen können, die diejenige konventionell hergestellter Formkörper sogar um mehr als 10 MPa übersteigt (Beispiel: 3D-gedruckt 102 MPa und konventionell hergestellt 91 MPa). Insgesamt ließen sich in den durchgeführten Versuchen bei geeigneten Füllstoff-Zusätzen Biegefestigkeiten bis über 150 MPa, ausreichend für permanenten Zahnersatz wie Einzelkronen, und E-Moduln bis etwa zu 5,5 GPa erreichen. Allgemein können Formkörper mit einem breiten E-Modul-Bereich gedruckt werden. Der E-Modul kann also gezielt an die Anfordernisse im Körper angepasst werden. Diese Anpassung ist sowohl über die Struktur der Matrix als auch über den Einsatz von Füllstoffen möglich. Überraschend ist hierbei auch, dass Bauteile mit über einen weiten Bereich isotropen mechanischen Eigenschaften erzeugt werden können.

Insbesondere ermöglicht das erfindungsgemäße Verfahren bei geeigneter Wahl der Matrixstruktur und/oder der Füllstoffe eine an natürliche Zähne angepasste Optik der gedruckten Bauteile, sprich eine hervorragende Ästhetik und Transluzenz (bis zu 75 % und darüber hinaus und damit mehr, als für zahntechnische Zwecke im Normalfall erforderlich). Insbesondere durch den Einsatz geeigneter Nanopartikel kann die Brechzahl der Matrix angehoben bzw. abgesenkt und damit an die Brechzahl der eingesetzten größeren Partikel angepasst werden, um die Transluzenz der Materialsysteme fein einzustellen. Das ermöglicht das Drucken patientenspezifischer Bauteile. Bei den für das erfindungsgemäße Verfahren eingesetzten Matrixsystemen handelt es sich außerdem um eine biokompatible, toxikologisch unbedenkliche Werkstoffbasis, was den Einsatz im Dentalbereich unproblematisch macht. Gleichzeitig lässt sich die Oberfläche der hergestellten Bauteile durch die Wahl einer hohen Auflösung glatt und so gut wie stufenfrei (häufig selbst mit dem Lichtmikroskop kaum zu erkennen) erzeugen, was zu einer guten Plaque-Resistenz führt. Ggf. durchgeführte Nachhärtungsschritte können sicherstellen, dass diese Oberfläche auch klebfrei ist.

Wie erwähnt können hohe mechanische Kennwerte der individuellen 3D-gedruckten Bauteile erzielt und der E-Modul für verschiedene Anwendungen angepasst werden. Insbesondere können dabei die mechanisch notwendigen Werte für Formkörper erreicht werden, die für eine permanente Versorgung mit einer Dental-Einzelkrone notwendig sind. Weiterhin können die Bauteile eine dem natürlichen Zahn angepasste Optik besitzen. Wenn nämlich die Brechungsindices der Matrix bzw. des Matrixsystems einschließlich dispergierter Nanopartikel und der Füllstoffe nahe beieinander liegen, erzielt man eine hervorragende Ästhetik/Transluzenz, während gleichzeitig die Werte für die Biegefestigkeit und den E-Modul sehr hoch sein können.

Die Angleichung der Brechungsindices von Matrix und Füllstoff gelingt dadurch, dass der Brechungsindex der Matrix, der in der Regel niedriger als der des Füllstoffs ist, angehoben wird. Hierfür kann die Matrix durch den Zusatz einer aromatischen, z.B. phenylhaltigen Gruppe modifiziert werden, wie z.B. oben angegeben. Beispiele für Matrices mit solchen Gruppen sind die Grundharze 1b, 1c, 1d und 1e, 3 und 4.

Alternativ oder zusätzlich kann eine Erhöhung der Brechzahl der Matrix auch durch den Zusatz von Füllstoffen mit höherer Brechzahl und mit sehr kleinem Durchmesser (im nm-Bereich; sogenannte Nanopartikel) erreicht werden, wenn es gelingt, diese Füllstoffe als Primärpartikel in der Matrix zu dispergieren. Die mechanischen Werte des Materials werden im Allgemeinen durch diese Maßnahme nur geringfügig beeinflusst, wie aus den untenstehenden Beispielen ersichtlich. Das Matrixsystem mit erhöhtem Brechungsindex kann dann mit geeigneten Füllstoffen mit ähnlichem Brechungsindex kombiniert werden, um unter Beibehaltung der Transluzenz verbesserte mechanische Eigenschaften zu erzielen.

Bestimmte Partikel wie z.B. $ZrO_2$ und $TiO_2$ besitzen zusätzlich die Fähigkeit, Energie in Form von Licht zu absorbieren, z.B. indem ein Elektron vom Valenz- ins Leitungsband angehoben wird (Entstehung eines Elektron-Loch-Paares). Im Anschluss erfolgt z.B. wieder eine Rekombination. Dadurch fungieren sie auch als Lichtabsorber. Diesbezüglich kann auf G. Wypych, Handbook of UV Degradation and Stabilization, ChemTec Publishing, Toronto 2015, S.45 verwiesen werden. Dort wird der Effekt anhand von $TiO_2$- und ZnO-Nanopartikeln gezeigt.

Wird der Weg der Erhöhung der Brechzahl der Harzmatrix über die Einarbeitung von anorganischen Nanopartikeln gewählt, kann sich der Zusatz von aromatischen Gruppen erübrigen. Dies kann von Vorteil sein, weil aromatische Komponenten unter Umständen zu Verbindungen mit östrogener Wirkung abgebaut werden können (z.B. Bisphenol-A), was aus gesundheitlichen Gründen natürlich zu vermeiden ist.

Festzuhalten ist bei den vorstehenden Erwägungen zur Brechzahlanpassung, dass die Brechzahl der Harzmatrix bei der Verfestigung in der Regel steigt. Dies muss bei der Berechnung der einzusetzenden Materialien berücksichtigt werden.

Weiterhin besitzt das Material für die erfindungsgemäßen Bauteile einen nur geringen Polymerisationsschrumpf (Grundharzsystem 1 zeigt bei Lichthärtung einen Volumenschrumpf von nur 5,2 %), was insbesondere beim schichtweisen Härten während der Herstellung mittels eines 3D-Druck-Verfahrens aufgrund des geringeren Verzugs der polymerisierten Schichten in lateraler Ebene von Vorteil ist. Somit können hochaufgelöste Bauteile mit guter Oberflächenqualität hergestellt werden.

Bei Bedarf kann das für den Druck eingesetzte Material mit weiteren geeigneten Gruppen funktionalisiert werden, z.B. mit solchen, die dem Produkt für die vorgesehene Verwendung geeignete Eigenschaften verleihen. Beispiele sind Gruppen, die eine gute Anbindung einer zusätzlichen Schicht oder eines Reparaturmaterials ermöglichen, wie beispielsweise aus EP 2 846 757 A1 bekannt.

In einer besonderen Ausführungsform der Erfindung besteht die Möglichkeit, mehrkomponentig in z-Richtung zu drucken. Dies kann z. B. durch den kontinuierlichen Zulauf eines zweiten Materials in die Materialwanne während des Bauprozesses erfolgen. Dadurch kann ein Materialgradient in z-Richtung erzeugt werden. Außerdem kann für eine bessere Druckbarkeit die Viskosität der Materialien selbst einerseits durch die Matrix und andererseits durch die Füllstoffe eingestellt und/oder für eine temporär geringere Viskosität der Materialien während des Druckens die Materialwanne mit einem Heizelement temperiert werden.

Mit dem erfindungsgemäßen Verfahren lassen sich nicht nur simple Geometrien, sondern auch komplexe Bauteile mit Überhängen drucken. Hierfür können in einer spezifischen Ausführungsform der Erfindung, die mit allen sonstigen Ausführungsformen kombinierbar ist, bei Bedarf verschiedene anorganische oder organische Additive bzw. Additiv-Kombinationen zugesetzt werden, die unten näher erläutert werden. So können für die Realisierung von komplexen Bauteilgeometrien, z.B. Bauteile mit überhängenden Strukturen, geeignete Lichtstabilisatoren (Substanzen, die im Bereich der eingesetzten Strahlung absorbieren) als Additive verwendet werden. Dies kann vor allem bei transluzenten Materialien notwendig oder zumindest hilfreich sein, da die Maßhaltigkeit der Schichten beim Drucken, insbesondere in z-Richtung, dadurch deutlich verbessert werden kann, was sich anhand der Ausführungsbeispiele genauer ergibt. Zu den Lichtstabilisatoren zählen z.B. Lichtabsorber und optische Aufheller. In einer besonderen Variante dieser spezifischen Ausführungsform handelt es sich bei den strahlungsabsorbierenden Zusätzen um solche, die fluoreszenzaktiv sind (d.h. neben der Funktion als Absorber können sie auch als optische Aufheller fungieren). Solche Materialien können UV-/sichtbares Licht absorbieren und im sichtbaren Licht wieder emittieren (Fluoreszenz). Durch die Emission von blauem Licht steigt die Farbsättigung. Auch können Gelbtöne damit überdeckt werden. Für dentale indirekte/direkte Restaurationsmaterialien sowie Prophylaxematerialien (z.B. Fissurenversiegler), ist die Fluoreszenz in vielen Fällen günstig, z.B. weil dadurch entsprechende im Mund eingesetzte künstliche Materialien unter Licht erkennbar/nachweisbar sind (Röntgenaufnahmen sind vermeidbar). Weiterhin ist es damit möglich, ein der natürlichen Zahnhartsubstanz vergleichbares Fluoreszenzverhalten zu generieren (siehe auch I. K. Lutskaya, N. V. Novak et al, Fluoreszenz von Zahnhartsubstanz und Füllungsmaterialien, ZMK, 2011, Jg. 27, Ausgabe 12).

Außerdem können je nach Materialsystem Druck-Parameter wie z.B. Belichtungszeit, Schichtstärke, Verfahrgeschwindigkeit in z-Richtung, Wartezeiten (vor und nach Belichtung), Drückkraft, Trennkraft oder Trennabstand in geeigneter Weise an das jeweilige Materialsystem und die gewünschten Bauteileigenschaften angepasst werden.

In allen Fällen können ungefüllte bis hochgefüllte Materialien verwendet werden. Je nach Bedarf können den erfindungsgemäß eingesetzten Zusammensetzungen demnach bevorzugt Lichtstabilisatoren, besonders bevorzugt anorganische und organische Lichtabsorber sowie optische Aufheller, zugesetzt werden.

Auf diese Weise kann den in der Literatur bekannten Problemen, welche im Zusammenhang mit dem sogenannten "overcuring" entstehen, entgegengewirkt werden und überhängende Strukturen können dimensionsgenau gedruckt werden. Beispielsweise werden Bauteile in Form von Brücken oder dergleichen gedruckt (= Bauteile mit Überhängen) und die Dicke der Überhänge wird vermessen und mit der gewünschten Dicke verglichen. Die vorliegende Erfindung stellt auch ein Verfahren bereit, mit dem sich das "overcuring" bestimmen lässt.

Die Erfindung ermöglicht das Drucken von Bauteilen aus opaken oder transluzenten Materialien mit guter Formgenauigkeit, Maßgenauigkeit, Maßhaltigkeit und Dimensionsgenauigkeit in allen Richtungen, insbesondere - z.B. bei überhängenden Teilen - auch in z-Achse. Dabei können je nach Bedarf einfache und auch komplizierte 3D-Strukturen mit ungefüllten oder niedrig- bis hochgefüllten Materialien verwendet werden.

Mit dem erfindungsgemäßen Verfahren ist es möglich, die Viskosität, die Biokompatibilität sowie mechanische und optische Eigenschaften der Materialien in geeigneter Weise aufeinander abzustimmen und auch bei komplexen Bauteilen das "overcuring" zu reduzieren bzw. zu vermeiden, wie weiter unten näher erläutert.

Die Erfindung schlägt für das erfindungsgemäße Verfahren und die damit herstellbaren Formkörper eine Stoffbasis mit einer geeigneten Konstellation bzw. einem passenden Zusammenspiel aller erforderlichen Materialeigenschaften vor, wie Viskosität, Ästhetik, Biokompatibilität und den mechanischen und abrasiven Eigenschaften, wie sie für eine möglichst realitätsnahe Imitation von Zähnen oder für die Herstellung von Zahnersatz erforderlich sind, insbesondere für die Herstellung von Systemen mit hohen Biegefestigkeiten, E-Moduln und Abrasionsresistenz. Die Erfindung ist auch für die Herstellung von Fissurenversieglern geeignet, die demnach erfindungsgemäß auch als "Formkörper" zu verstehen sind. Außerdem lassen sich mit dem erfindungsgemäßen Verfahren Formkörper herstellen, die sich als Zahnschienen für Zahnkorrektur, Zahnschutz/Mundschutz, z.B. für Sportler, Schnarcherschienen, Aufbissschienen oder Knirscherschienen eignen.Die erfindungsgemäß einsetzbaren Materialien besitzen geeignete Viskositäten für den erfindungsgemäß nutzbaren 3D-Druck, insbesondere dem Digital Light Processing. Dabei ist die Druckbarkeit der Materialien auch bei hohem Füllstoffgehalt und damit erhöhter Viskosität bei hoher Oberflächengenauigkeit und -auflösung möglich.

Es lassen sich dementsprechend mit dem erfindungsgemäßen Verfahren Formkörper aus einem Ausgangsmaterial erzeugen, dessen Viskosität für die vorgeschlagenen Druckprozesse gut geeignet ist. Die Formkörper selbst können eine hohe Transluzenz und gute mechanische Eigenschaften besitzen. Solche Formkörper sind z.B. als Einzelkronen im Dentalbereich sehr gut nutzbar, da sie neben den notwendigen mechanischen auch geeignete optische und biokompatible Eigenschaften besitzen.

Nachstehend soll die Erfindung anhand von allgemeineren und konkreteren Darlegungen sowie Ausführungsbeispielen näher erläutert werden, ohne dass sich hieraus irgendwelche Einschränkungen ergeben sollen.

1. Konkret eingesetzte Druckvorrichtung

Für alle 3D-gedruckten Bauteile wurde der 3D-Drucker S60 LED von Rapidshape (Digital Light Processing-Verfahren) verwendet. Das lichthärtende Harz wird in einem Badbehälter vorgelegt, dessen Boden lichtdurchlässig ist. Licht einer geeigneten Lichtquelle trifft durch den Badboden in das Materialbad im Badbehälter. Die Erzeugung des Belichtungsprofils geschieht mit Hilfe eines DLP-Chips, welcher viele Mikrospiegel enthält. Diese können einzeln angesteuert werden und durch ein Kippen das Licht entweder in die Projektionsebene hinein oder heraus lenken, um somit das gewünschte Belichtungsprofil zu generieren. Eine Plattform kann mit Hilfe eines Motors in z-Richtung in das Bad abgesenkt und von dort schichtweise nach oben verschoben werden. Die Bildung des Formkörpers beginnt mit der Verfestigung des in z-Richtung schmalen Bereichs zwischen Badboden und Unterseite der Plattform. Nach der Verfestigung dieses Bereichs wird die Plattform zunächst auf einen bestimmten sogenannten Trennabstand angehoben, sodass weiteres Harzmaterial zwischen den verfestigten Bereich und den Badboden gelangt. Anschließend fährt die Plattform wieder ein Stück nach unten, sodass zwischen dem Badboden und dem verfestigten Bauteil genau der Abstand der gewünschten Schichtstärke eingestellt ist. In einem zweiten Schritt folgt die Verfestigung dieses Harzmaterials. Dieser Schritt wird wiederholt, bis das Bauteil fertig ist. Dabei wird bei jeder Schicht das Belichtungsprofil in x-y-Dimension in geeigneter Weise gewählt. Bei diesem Verfahren können auch Hinterschneidungen entstehen, indem nachfolgende Schichten eine größere x-y-Ausdehnung aufweisen als vorangehende.

Die Belichtung beim 3D-Druckverfahren erfolgte in den Beispielen mit Wellenlängen im Grenzbereich von sichtbarem Licht und UV-Licht, insbesondere mit ca. 382 nm, einer Intensität von ca. 6,15 W/m$^2$ und einer Dauer von 3 bis 50 s, in der Regel etwa 5 bis 24 s. Es wurden Schichtstärken von 25, 35, 50 und 100 $\mu$m gedruckt.

2. Für die Polysiloxan-Komponente verwendete Harzsysteme ("Grundharzsysteme")

a) Grundharzsystem 1 (siehe DE 44 16 857)

Zur Vorlage von 125,0 g (0,503 mol) 3-Glycidyloxypropyldiethoxymethylsilan werden unter trockener Atmosphäre Triphenylphosphin als Kat., BHT als Stabilisator und anschließend 47,35 g (0,550 mol) Methacrylsäure zugetropft und bei 80 °C gerührt (ca. 24 h). Die Umsetzung kann mittels NMR verfolgt werden. Nach Zugabe von Essigester und H$_2$O zur Hydrolyse mit HCl als Kat. wird bei 30 °C gerührt. Die Aufarbeitung erfolgt nach mehrtägigem Rühren durch Ausschütteln mit wäßriger NaOH und Wasser und Filtration über hydrophobierten Filter. Es wird zunächst abrotiert und anschließend mit Ölpumpenvakuum abgezogen. Es resultiert ein flüssiges Harz mit einer Viskosität von ≈ 3 - 5 Pa.s bei 25 °C sowie einer Brechzahl $n_D$ ≈ 1,477.

b) Grundharzsystem 1a (siehe DE 102013108594)

Grundharzsystem 1 enthält eine freie Hydroxygruppe am Rest, der auch die Methacrylatgruppe trägt. Diese lässt sich mit unterschiedlichen Unterschuss-Mengen Thiophenol umsetzen, das nach dem Thiol-En-Mechanismus an der Methacrylatgruppe angreift.

Zur Vorlage von 119,7 g (0,45 mol) Grundharzsystem 1 werden unter Rühren 22,3 g (0,203 mol) Thiophenol zugetropft. Es resultiert ein flüssiges Harz mit einer Viskosität von ca. 7 Pa·s bei 25°C und einer Brechzahl $n_D$ von ca. 1,508. Eine weitere Aufarbeitung ist nicht erforderlich.

c) Grundharzsystem 1b (siehe DE 102013108594)

Zur Vorlage von 15,4 g Grundharzsystem 1a und 0,043 g BHT (2,6-Di-tert-butyl-4-methylphenol) werden unter trockener Atmosphäre bei 30°C unter Rühren 6,21 g (0,04 mol) Methacrylsäureisocyanatoethylester (0,8 Mol pro Mol methacrylat-substituiertem Rest mit und ohne Umsetzung mit Thiophenol) zugetropft und bei 30°C weitergerührt. Es resultiert ein flüssiges Harz mit einer Viskosität von ca. 36 Pa.s bei 25°C und einer Brechzahl $n_D$ von ca. 1,502. Eine weitere Aufarbeitung ist nicht notwendig.

Ein vergleichbares System kann auch unter vertauschter Zugabe der Komponenten Thiophenol und Methacrylsäureisocyanatoethylester hergestellt werden. Wenn dieser Weg gewählt wird, kann die SH-Gruppe sowohl an die Methacrylatgruppe des Grundharzsystems 1 als auch an die Methacrylatgruppe der addierten Isocyanatoverbindung addieren. Das so hergestellte Grundharzsystem ist daher nicht mit dem Produkt der ersteren Zugaben-Abfolge identisch.

d) Grundharzsystem 1c (siehe DE 102013108594)

Die Herstellung von Grundharzsystem 1b wurde wiederholt mit der Änderung, dass anstelle von Thiophenol die entsprechende molare Menge von 4-Methylthiophenol eingesetzt wurde.

e) Grundharzsystem 1d (siehe DE 103 49 766.8)

(a) Zur Vorlage von 78,15 g (0,30 mol) Grundharzsystem 1 und 16,70 g Triethylamin (0,55 mol) in 300 ml THF werden unter trockener Atmosphäre und Kühlung mittels Eisbad unter Rühren 13,52 g (0,15 mol) Acrylsäurechlorid zugetropft und bei Raumtemperatur weitergerührt. Nach üblicher Aufarbeitung zur Abtrennung des bei der Addition entstehenden Aminhydrochlorids und säurehaltiger Nebenprodukte sowie Abziehen der flüchtigen Bestandteile mit Ölpumpenvakuum resultiert ein flüssiges Harz mit einer Viskosität von ca. 2,7 Pa.s bei 25 °C.

(b) (siehe DE 102013108594) Zur Vorlage von 0,3740 g (1,3165 mmol) Grundharzsystem 1e (a) in 5 ml THF gelöst werden unter Rühren und unter Schutzgas-Atmosphäre 0,0654 g (0,5266 mmol) 4-Methylthiophenol zugetropft und bei RT gerührt (ca. 24 h). Es wird zunächst abrotiert und anschließend mit Ölpumpenvakuum abgezogen. Es resultiert ein flüssiges Harz.

f) Grundharzsystem 2 (siehe DE 103 49 766.8)

Zur Vorlage von 130,3 g (0,5 mol) aus Grundharzsystem 1 werden unter trockener Atmosphäre bei 30 °C unter Rühren 54,3 g (0,7 mol) Methacrylsäureisocyanatoethylester zugetropft und bei 30 °C weitergerührt. Nach Isocyanatumsatz werden 0,092 g BHT zugesetzt. Es resultiert ein flüssiges Harz mit einer Viskosität von ca. 28 - 34 Pa.s bei 25 °C.

g) Grundharzsystem 3

(a) Precursorsynthese: 85,69 g (0,40 mol) Glycerin-1,3-methacrylat-acrylat, 0,172 g BHT, 0,448 g Triethylendiamin und 41,2 g (0,41 mol) Bernsteinsäureanhydrid wurden in 86 ml THF gelöst und bei ca. 62 °C für ca. 24 h gerührt. Die Umsetzung kann über NMR verfolgt werden. Die Aufarbeitung erfolgt durch Ausschütteln mit $H_2O$, anschlie-ßender Zugabe von Essigester und Filtration über hydrophobierten Filter. Es wird zunächst abrotiert und anschließend mit Ölpumpenvakuum abgezogen. Es resultiert der flüssige Precursor.

(b) Synthese Vorstufe (siehe DE 44 16 857): Zur Vorlage von 42,23 g (0,17 mol) 3-Glycidyloxypropyldiethoxymethylsilan, 0,1 Gew.-% BHT und 0,357 g Triphenylphosphin werden unter Rühren bei ca. 82 °C 10,68 g (0,034 mol) Precursor 3 (a) zugetropft. Nach ca. 4 h werden 13,17 g (0,153 mol) Methacrylsäure zugetropft und ca. 40 h bei 82 °C gerührt. Die Umsetzung kann über NMR verfolgt werden. Nach Zugabe von Essigester und $H_2O$ zur Hydrolyse mit HCl als Kat. wird bei 30 °C gerührt. Die Aufarbeitung erfolgt nach ca. 48 h Rühren durch Ausschütteln mit wässriger NaOH und Wasser und Filtration über hydrophobierten Filter. Es wird zunächst abrotiert und anschließend mit Ölpumpenvakuum abgezogen. Es resultiert ein flüssiges Harz mit einer Viskosität von ≈ 8 Pa.s bei 25 °C sowie einer Brechzahl $n_D$ ≈ 1,481.

(c) Umsetzung zu Grundharzsystem 3: Die Addition von Methylthiophenol an 3 (b) erfolgt entsprechend 2 e) (b), wobei ein flüssiges Produkt resultiert.

h) Grundharzsystem 4 (siehe EP 0451709; EP 0450624)

Synthese Vorstufe: Zur Vorlage von 9,95 g (46,4 mmol) Glycerin-1,3-methacrylat-acrylat und 0,029 g Dibutylzinndilaurat werden bei RT unter Rühren 10,08 g (46,4 mmol) 3-Isocyanatopropylmethyldiethoxysilan zugetropft und bis zur Umsetzung bei RT gerührt. Nach Zugabe von Essigester (1000 ml / mol Silan) und $H_2O$ zur Hydrolyse mit HCl als Kat. wird bei 30 °C gerührt. Die Aufarbeitung erfolgt nach ca. 48 h Rühren durch Ausschütteln mit wässriger NaOH und Wasser und Filtration über hydrophobierten Filter. Es werden 0,04 Gew.-% BHT zugesetzt. Es wird zunächst abrotiert und anschließend mit Ölpumpenvakuum abgezogen. Es resultiert ein flüssiges Harz mit einer Viskosität von ≈ 89 Pa·s bei 25 °C sowie einer Brechzahl $n_D$ ≈ 1,486.

Umsetzung zu Grundharzsystem 4: Die Addition von Methylhiophenol erfolgt entsprechend 2 e) (b), wobei ein flüssiges Produkt resultiert.

3. Mechanische Untersuchungen der ungefüllten Harzsysteme

Für die Biegefestigkeit und den E-Modul wurden immer 10 Proben untersucht; die angegebenen Werte stellen das Mittel daraus dar.

3.1. Vergleich der mechanischen Daten von erfindungsgemäß hergestellten Probenköpern mit denen auf konventionellem Wege hergestellter Probenkörper.

Hierfür wurde im Grundharzsystem 1 bei 40 °C 2 Gew.-% Dibenzoylperoxid (DBPO) gelöst. Anschließend wurde 1 Gew.-% 2,4,6-Trimethylbenzoyldiphenylphosphinoxid (LTPO) bei 34 °C in der Mischung gelöst. Dann wurden Probenkörper mit bestimmten Abmessungen wie unten angegeben auf drei unterschiedliche Arten hergestellt (auf die Herstellungsmethoden wird auch in den nachfolgenden Abschnitten des Textes Bezug genommen, wobei die Belichtungszeiten und Schichtstärken des Verfahrens III teilweise von den für diese ersten Untersuchungen verwendeten abweichen, was dann jeweils konkret angegeben wird):

I. Konventioneller Formguss mit Lichthärtung: Das Harzmaterial wurde in Formen gegeben, und die Polymerisation und damit Bildung der Probenkörper erfolgte, falls nicht anders angegeben, durch zweimaliges Belichten für je 100 s mit dem Dentalstrahler Polofil® Lux der Voco GmbH, Cuxhaven (einmal von der Ober- und einmal von der Unterseite her) mit sichtbarem Licht eines breiten Spektrumsbereichs. Die Probenköper hatten Abmessungen von 2 mm x 2 mm x 25 mm.

II. Konventioneller Formguss mit thermischer Härtung: Das Harzmaterial wurde in Formen gegeben, und die Polymerisation und damit Bildung der Probenkörper erfolgte durch eine 4-stündige thermische Aushärtung bei 100 °C. Die Probenköper hatten Abmessungen von 2 mm x 2 mm x 25 mm.

III. Erfindungsgemäß genutzter 3D-Druck: Die Probenkörper wurden mit verschiedenen Schichtstärken (für Abschnitt 3.1. mit 100 μm) und Belichtungszeiten (für Abschnitt 3.1 mit 24 s pro Schicht) bei einer Lichtintensität von ca. 6,15 W/m² und einer Wellenlänge von ca. 382 nm gedruckt, anschließend in Isopropanol für 60 s im Ultraschallbad gewaschen, mit Druckluft abgeblasen, für 5 Min getrocknet bei 23 °C für ein restliches Verdunsten des Lösemittels und bei 100 °C für 2 h im Ofen nachgehärtet. Die Probenköper hatten Abmessungen von 2 mm x 2 mm x 27 mm und wurden mit senkrechter Ausrichtung zur Bauplattform gedruckt, d. h. 27 mm zeigten in z-Richtung.

Anschließend wurden die erhaltenen Proben-Formkörper jeweils geschliffen und sodann für 24 h bei 40 °C trocken gelagert. Die anschließende Durchführung der 3-Punkt-Biegeversuche erfolgte in Anlehnung an die Prüfnorm DIN EN ISO 4049: 2009 mit der Universalprüfmaschine Z100 der Firma Zwick/Roell (Zwick GmbH & Co. KG, Ulm), mit der Änderung, dass anstelle einer Wasserlagerung eine Trockenlagerung vorranging und die Vorschubgeschwindigkeit 3 mm/Min betrug. Der E-Modul wurde im linearen Bereich der Spannungs-Dehnungs-Kurve zwischen 10-20 MPa über die Sekante bestimmt.

• Ergebnis:

| | Biegefestigkeit [MPa] | E-Modul [GPa] |
|---|---|---|
| I. Lichthärtung | 91 | 2,1 |
| II. Thermische Härtung | 89 | 2,2 |
| III. 3D-Druck (100 $\mu$m; 24 s) | 102 | 2,2 |

Die Ergebnisse zeigen, dass die Verwendung von 3D-Druck anstelle einer Licht- oder thermischen Härtung selbst bei relativ dicken Schichten von 100 $\mu$m zu einer signifikanten Verbesserung der Biegefestigkeit (um mindestens 11 MPa bzw. mehr als 10%!) führt.

Ein Vergleich mit den in DE 10 2014 116 402 A1 angegebenen Werten zeigt Folgendes: Dort wurden vier verschiedene Polysiloxan-Harze, die jeweils mit und ohne Zusatz eines Disilans hydrolytisch kondensiert worden waren, konventionell durch Belichten gehärtet, wobei Campherchinon als Photoinitiator (Absorptionsmaximum bei ca. 470 nm) zusammen mit Ethyl-p-N,N-dimethylaminobenzoat (DABE) als Co-Initiator (der bei Einsatz von Campherchinon immer erforderlich ist) eingesetzt wurde. "Polysiloxan IV" entspricht dem Grundharzsystem 1 der vorliegenden Erfindung. Die Formkörper daraus hatten bessere Biegefestigkeiten als die aus den anderen untersuchten Harzen; dennoch lag der Wert mit 25,7 MPa deutlich unter dem vorliegend gefundenen Wert. Selbst der Zusatz der größten verwendeten Menge an Disiloxan brachte nur eine Erhöhung auf 38,1 MPa, während die Erfinder der vorliegenden Erfindung bei einer vergleichbaren Härtung eine Biegefestigkeit von 91 MPa fanden. Der Grund für die unterschiedlichen Werte ist nicht unmittelbar ersichtlich; dies kann sowohl an einer unvollständigen Härtung, an der Verwendung anderer Wellenlängen und dementsprechend anderen Photoinitiatoren oder anderem liegen. Wesentlich ist jedoch, dass die Erfinder der DE 10 2014 116 402 A1, wohl aufgrund der von ihnen aufgefundenen schwachen Ergebnisse, an Harzsystemen ohne Disiloxane keine weiteren Untersuchungen, insbesondere keine solchen mit stereolithographisch gewonnenen Produkten, vornahmen. Auch werden keine Festigkeitswerte für stereolithographisch erzeugte Formkörper aus Harzen mit Disiloxanen ohne Zusatz von Füllstoffen angegeben. Dass die vorliegend gefundene Biegefestigkeit eines aus Polysiloxanharz gebildeten Formkörpers, der unter Verwendung von 3D-Druck mit Hilfe eines Photoinitiators, insbesondere bei einer Belichtung im Bereich der Grenze von sichtbar nach UV, also unter 400 nm und ohne Füllstoffe hergestellt wurde, deutlich höher ist, als die eines entsprechenden, "konventionell" hergestellten Formkörpers, ist daher völlig unerwartet.

3.2 Abhängigkeit von der Belichtungszeit pro Schicht

Das Grundharzsystem 1, versetzt mit 2 Gew.-% DBPO und 1 Gew.-% LTPO, wurde wie unter 3. 1. III. oben beschrieben mit einer Schichtstärke von 100 $\mu$m hergestellt, wobei unterschiedliche Belichtungszeiten pro Schicht gewählt wurden.

Ergebnis:

| Belichtungszeit [s] | Biegefestigkeit [MPa] | E-Modul [GPa] |
|---|---|---|
| 12 | 96 | 2,4 |
| 18 | 97 | 2,3 |
| 20 | 99 | 2,3 |
| 22 | 98 | 2,4 |
| 24 | 102 | 2,2 |
| 26 | 98 | 2,3 |

Es lässt sich also zeigen, dass die Biegefestigkeit und der E-Modul relativ unabhängig von der Belichtungszeit pro Schicht sind. Dabei sei noch angemerkt, dass die erforderliche Belichtungszeit auch von der Intensität der verwendeten Strahlung abhängig ist: Wird die Intensität variiert, sollte die Belichtungszeit entsprechend angepasst werden, derart, dass Intensität x Belichtungsdauer annähernd konstant bleiben. Auch ist die Belichtungszeit von der verwendeten Schichtstärke abhängig: Wird die Schichtstärke variiert, sollte die Belichtungszeit entsprechend angepasst werden.

3.3 Abhängigkeit von der Schichtstärke

Das Grundharzsystem 1, versetzt mit 2 Gew.-% DBPO und 1 Gew.-% LTPO, wurde wie unter 3. 1. III. oben beschrieben hergestellt, wobei unterschiedliche Schichtstärken gewählt wurden. Die Belichtungszeit wurde dementsprechend angepasst.

Ergebnis:

| Schichtstärke [$\mu$m] | Belichtungszeit [s] | Biegefestigkeit [MPa] | E-Modul [GPa] |
|---|---|---|---|
| 100 | 24 | 102 | 2,2 |
| 50 | 12 | 95 | 2,2 |
| 35 | 8,4 | 94 | 2,3 |
| 25 | 6 | 96 | 2,2 |

Die höchste Biegefestigkeit ergibt sich demnach bei einer Schichtstärke von 100 $\mu$m, der höchste E-Modul bei einer Schichtstärke von 35 $\mu$m. Insgesamt ist aber festzuhalten, dass die Unterschiede von mit unterschiedlicher Schichtstärke gedruckten Formkörpern relativ gering sind.

3.4 Untersuchungen zur Relation zwischen der Anordnung der Prüfkörper im Raum und der Biegefestigkeit bei nach dem 3D-Verfahren gedruckten Stäbchen

Stäbchenförmige (quaderförmige) Prüfkörper aus Grundharzsystem 1 mit 2 Gew.-% DBPO, 1 Gew.-% LTPO und 0,5 Gew.-% TiO$_2$-NP wurden mit unterschiedlichen Winkeln zwischen 0 und 45 ° zum Lot zur Plattform und zum Badboden mit einer Schichtstärke von 100 $\mu$m und einer Belichtungszeit von 9 s gedruckt. Eine Ausrichtung von 0 ° entspricht dabei einer Ausrichtung senkrecht zur Bauplattform. Die Bestimmung der Biegefestigkeit der fertigen Prüfkörper erfolgt in allen Fällen mit Krafteinwirkung senkrecht zu derjenigen Seitenfläche der Prüfkörper, die beim Herstellen zur Bauplattform zeigte.

| Ausrichtung [°] | Biegefestigkeit [MPa] | E-Modul [GPa] |
|---|---|---|
| 0 | 85 | 2,2 |
| 15 | 87 | 2,1 |
| 30 | 87 | 2,2 |
| 45 | 85 | 2,2 |

Es zeigt sich also, dass die mechanischen Eigenschaften der Prüfkörper unabhängig von der Stäbchen-Ausrichtung zur Bauplattform sind. Es ergeben sich somit über einen weiten Bereich der Bauteilausrichtung isotrope mechanische Eigenschaften.

3.5 Abhängigkeit von der Ausrichtung im Bauraum

Bei der Herstellung von Körpern, z.B. solchen mit überhängenden schrägen Flächen, wie bei Prüfkörpern in Form von Stäbchen (Quadern mit quadratischer Grundfläche), welche schräg zur Bauplattform ausgerichtet sind, und generell bei Bauteilen mit Überhängen/Hinterschneidungen kann in manchen Fällen ein - literaturbekannter - Fehler auftreten. Bei Materialien mit einer hohen Transluzenz im unausgehärteten Zustand wird das Licht nämlich unter Umständen von der zu belichtenden Schicht nicht vollständig absorbiert, sondern in die bereits gedruckten Schichten, insbesondere in z-Richtung, weiter- und durchgeleitet (sogenanntes overcuring). Für senkrecht gedruckte Stäbchen (siehe. Fig. 3) ist dies kein Problem, da das Licht nur in bereits ausgehärtete Schichten weitergeleitet wird. Für schräg gedruckte Stäbchen wird dies problematisch. Hier wird das Licht wieder ins Materialbad geleitet, wodurch dort die Polymerisation von Material ausgelöst wird. An diesen Stellen erfolgt somit eine unerwünschte Aushärtung des Materials und es kommt damit zu einer Materialanhäufung. Dieser Effekt wird "Fehlerhafte Durchpolymerisation" (FD) genannt. Der gleiche Effekt ist anhand einer weiteren Bauteilgeometrie mit Überhang (= Brücke) in Figur 2 dargestellt. Im Allgemeinen ist dieser Defekt umso größer, je transluzenter das Material ist.

Weiterhin trägt zur Formgenauigkeit in z-Achse folgendes Phänomen bei: Im ungehärteten Zustand gibt es bei mit Füllstoff gefüllten Harzen eine bestimmte Brechzahldifferenz von Matrix und Füllstoffen. Da sich im gehärteten Zustand die Brechzahl der Matrix in der Regel erhöht, verändert sich diese Brechzahldifferenz (wenn $n_{D\text{-Füller}} > n_{D\text{-Matrix}}$ wird $\Delta n_D$ kleiner).

4. Entwicklung eines Verfahrens zur Ermittlung der "Fehlerhaften Durchpolymerisation" (FD) und generelle Lösungsmöglichkeiten

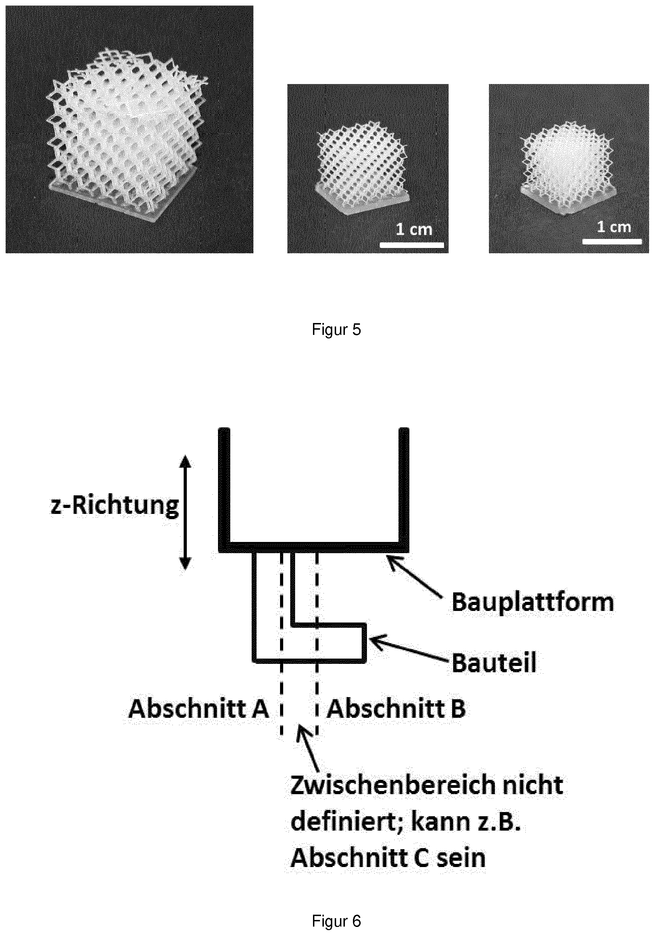

Die fehlerhafte Durchpolymerisation (FD) wird erfindungsgemäß anhand spezieller Prüfkörper ermittelt, die einen möglichst großen und gut messbaren Überhang aufweisen und schnell druckbar sind. Diesbezüglich sei auf Fig. 6 verwiesen: Als Probenkörper dienen solche mit mindestens zwei parallel zur z-Richtung zueinander abgegrenzte unterschiedlichen Abschnitten, wobei ein Abschnitt A mindestens eine, vorzugsweise mehrere verfestigte Schichten aufweist, die ausgehend von der Oberfläche der Plattform gebildet werden, und ein Abschnitt B verfestigte Schichten aufweist, die in z-Richtung nicht bis zur Bauplattform reichen. Die Schichten des Abschnitts B können, müssen aber nicht, die bei dem Verfahren zuletzt verfestigte Schicht oder mehrere solche Schichten sein oder diese umfassen. Sie können die Form einer einzelnen, dicken Schicht haben oder mehrere, dünnere Schichten oder Lamellen (z.B. Stege) aufweisen. Mindestens ein Abschnitt der Probenkörper muss die zuletzt geformten Schichten aufweisen. Das kann einer der Abschnitte A oder B sein oder eine Kombination aus beiden; es kann aber genauso gut ein dritter Abschnitt C vorhanden sein, der zusätzlich oder ausschließlich die zuletzt gedruckten Schichten aufweist.

Die Bauteile sind also so gestaltet, dass nach fertigem Druck ein Abschnitt B des Bauteils, in z-Richtung gesehen, nicht bis zur Bauplattform reicht, so dass zwischen der während des Verfahrens "oben" befindlichen ausgehärteten Seite des Abschnitts B und der Bauplattform ein Zwischenraum mit unausgehärtetem Material (bzw. mit Luft, wenn sich der Formkörper nicht mehr im Bad befindet) verbleibt, oder dass in diesem Abschnitt B des Bauteils in z-Richtung gesehen Zwischenräume mit unausgehärtetem Material bzw. Luft zwischen ausgehärteten Teilen verbleiben.

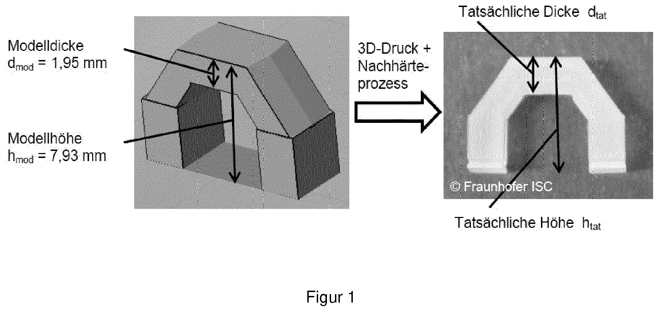

In einer bevorzugten Ausführungsform besitzen die Prüfkörper die Form von Brücken oder haben die Form eines "H". In beiden Fällen handelt es sich um Prüfkörper mit zwei Balken, die an der Bauplattform anliegen (Abschnitte A), wobei sich zwischen den beiden Balken ein Querbalken befindet, der nicht an der Bauplattform anliegt (Abschnitt B), sondern einen freien Raum zwischen seiner während des Verfahrens "oben" befindlichen Seite und der bewegbaren Plattform lässt. Wenn dieser Querbalken am Ende des Verfahrens am Badboden anliegt, hat der Prüfkörper die Form einer Brücke, wie z.B. in Fig. 1 gezeigt. Wenn der Querbalken nicht bis zum Badboden reicht, die Balken der Abschnitte A jedoch sehr wohl, hat der Prüfkörper die Form eines "H".

Die Abmessungen eines virtuellen Modells für jeden Probenkörper in z-Richtung, die dem Verfahren zugrunde gelegt werden, einschließlich der Gesamt-Bauteilhöhe, müssen bekannt sein, und die tatsächlichen Abmessungen des mit dem Verfahren erzeugten Probenkörpers in z-Richtung werden nach Beendigung des Verfahrens bestimmt.

Da durch die Nachhärtung der Bauteile eine geringfügige Schwindung der Bauteilhöhe entsteht, muss diese in die Betrachtung einbezogen werden. Die Modellhöhe $h_{mod}$ des Prüfkörpers ist vorgegeben, und da die tatsächliche Höhe des gesamten Prüfkörpers $h_{tat}$ durch die Glasplatte (den Badboden) und die (Bau-)Plattform des 3D-Druckers begrenzt ist, hat der Effekt der FD keinen Einfluss darauf. Somit kann durch Messen der tatsächlichen Höhe $h_{tat}$ des gedruckten Bauteils die Höhenschwindung S durch die Nachhärtung wie folgt berechnet werden:

$$S = 1 - \frac{h_{tat}}{h_{mod}} \quad [einheitslos] \qquad \text{Formel (1)}$$

Als nächstes wird die theoretische Solldicke $d_{soll}$ ohne FD am Überhang, also am Abschnitt B, bestimmt. Durch die ebenfalls gegebene Modelldicke $d_{mod}$ kann mit Hilfe der zuvor ausgerechneten Höhenschwindung S die Solldicke nach dem Druckprozess und Nachhärten, wie in nachfolgender Formel dargestellt, berechnet werden.

$$d_{soll} = d_{mod} - (d_{mod} \cdot S) = d_{mod} \cdot (1 - S) \; [mm] \quad \text{Formel (2)}$$

Anhand der gemessenen tatsächlichen Dicke des Überhangs / Abschnitts B $d_{tat}$ und der berechneten Solldicke $d_{soll}$ lässt sich anschließend mit folgender Formel (3) die FD in % ausrechnen. Dabei entspricht ein Wert von 0 % der gewünschten Solldicke. Geht der Wert über 0 % hinaus, entspricht das einer unerwünschten Zunahme der Solldicke, welche durch die Anpolymerisierung von flüssigem Material zustande kommt.

$$FD = \left(\frac{d_{tat}}{d_{soll}} - 1\right) \cdot 100 \quad [\%] \qquad \text{Formel (3)}$$

Durch Einsetzen von Formel (1) und Formel (2) in Formel (3) und mit $d_{mod}$ = 1,95 mm und $h_{mod}$ = 7,93 mm ergibt sich schließlich (Formel 4):

$$FD = \left(\frac{d_{tat} \cdot h_{mod}}{d_{mod} \cdot h_{tat}} - 1\right) \cdot 100 = \left(4\frac{1}{15} \cdot \frac{d_{tat}}{h_{tat}} - 1\right) \cdot 100 \quad [\%] \quad \text{Formel (4)}$$

Die FD wurde in der vorliegenden Anmeldung immer anhand derartiger Brücken bestimmt.

Um die FD zu ermitteln, müssen die Belichtungszeiten beim 3D-Druck soweit gesenkt werden, bis es zu einer Beeinträchtigung der Bauteiloberfläche kommt. Diese Vorgehensweise ist wichtig, da Bauteilqualität, fehlerhafte Durchpolymerisierung und Belichtungszeit zusammenhängen, wobei natürlich zu berücksichtigen ist, dass die Belichtungszeit auch von der Intensität der Strahlung abhängt: Die Gesamtmenge an Strahlung errechnet sich ungefähr aus dem Produkt von Intensität der Strahlung und der Belichtungszeit. Auch zu berücksichtigen ist, dass die Belichtungszeit auch von der Schichtstärke abhängt. Je höher die Belichtungszeit ist, desto besser wird in der Regel - und bis zu einer gewissen Obergrenze der Belichtungszeit - die Oberflächenqualität, jedoch nimmt damit auch die FD stärker zu. Ist die Belichtungszeit hingegen zu gering, kann zwar eine niedrige FD ermittelt werden, jedoch auf Kosten der Oberflächenqualität. Somit wird die niedrigste Belichtungszeit, bei der die Bauteiloberfläche noch sehr gut ist, d.h. eine vollständig glatte, von visuell (mit dem bloßen Auge) sichtbaren Riffelstrukturen und Rauheiten freie Oberfläche und vollends ausgebildete und scharfe Konturen, Ecken und Kanten besitzt, und/oder bei der eine Steigerung der Belichtungszeit zu keiner Verbesserung der Bauteiloberfläche führt, als "Optimale Belichtungszeit" für ein Materialsystem gewählt und anhand der zugehörigen Brücken die FD der Bauteile ermittelt.

Die Erfindung stellt demnach auch ein Verfahren zur Ermittlung der fehlerhaften Durchpolymerisation (FD) eines Formkörpers bereit, hergestellt nach einem der erfindungsgemäß einsetzbaren Verfahren, insbesondere dem DLP- oder CLIP-Verfahren, wobei der Körper aus einem in einem Badbehälter befindlichen, flüssigen oder viskosen Badmaterial erzeugt wird und die Verfestigung des Formkörpers dadurch erfolgt, dass Licht einer Strahlungsquelle durch einen lichtdurchlässigen Teil des Bodens des Badbehälters auf einen nach unten gerichteten Bereich einer Oberfläche einer in dem Badmaterial befindlichen, in z-Richtung nach oben wegbewegbaren Plattform gerichtet wird, wobei eine dort befindliche Schicht des flüssigen oder viskosen Badmaterials durch die Einwirkung von Strahlung einer organischen Polymerisation unterworfen und dadurch verfestigt wird, worauf nacheinander weitere Schichten des flüssigen oder viskosen Materials, die sich jeweils auf der Schicht des zuletzt verfestigten Materials befinden, mit Hilfe dieser Strahlungsquelle verfestigt werden, indem die Plattform in z-Richtung nach oben wegbewegt wird, dadurch gekennzeichnet, dass als Formkörper ein Probenkörper mit mindestens zwei unterschiedlichen Abschnitten dient, wobei ein erster Abschnitt A mindestens eine, vorzugsweise mehrere verfestigte Schichten aufweist, die ausgehend von der Oberfläche der Plattform gebildet werden, und ein zweiter Abschnitt B verfestigte Schichten aufweist, die in z-Richtung nicht bis zur Bauplattform reichen, wobei die Abmessungen eines virtuellen Modells für den Probenkörper in z-Richtung, die dem Verfahren zugrunde gelegt werden, bekannt sind und die tatsächlichen Abmessungen des mit dem Verfahren erzeugten Probenkörpers in z-Richtung nach Beendigung des Verfahrens - d.h ggf. nach entsprechend anzuwendenden Nachbehandlungen wie Waschen und/oder Nachhärten - bestimmt werden, wobei die FD mit Hilfe der Formel bestimmt wird:

$$FD = \left(\frac{d_{tat} \cdot h_{mod}}{d_{mod} \cdot h_{tat}} - 1\right) \cdot 100 = \left(4\frac{1}{15} \cdot \frac{d_{tat}}{h_{tat}} - 1\right) \cdot 100 \quad [\%]$$

worin $h_{mod}$ die Höhe des virtuellen Modells des Probenkörpers in z-Richtung, $h_{tat}$ die bestimmte Bauhöhe des erzeugten Probenkörpers in z-Richtung, $d_{mod}$ die Abmessungen der oder einer Schicht im Abschnitt B des virtuellen Modells des Probenkörpers und $d_{tat}$ die bestimmte Höhe dieser Schicht im Abschnitt B des erzeugten Probenkörpers bezeichnet.

5. Reduzierung der "Fehlerhaften Durchpolymerisation" (FD) - konkrete Vorschläge

Die vorliegende Erfindung bietet eine ganze Reihe von Lösungen für die Problematik der fehlerhaften Durchpolymerisation, wobei sich verschiedene Effekte ergeben können, die jeweils je nach gewünschter Anwendung von Vorteil sein können.

Beispielsweise kann die Brechzahl von Matrix und Füllstoff so gewählt werden, dass die Brechzahldifferenz zwischen Matrix und Füllstoff nach Aushärtung gering ist, so dass das fertige Bauteil wie gewünscht eine hohe Transluzenz besitzt. Da sich die Brechzahl der Matrix wie bereits oben erwähnt beim Aushärten verändert, in der Regel erhöht, können die jeweiligen Brechzahlen der Matrix und Füllstoffe so gewählt werden, dass die Lichtstreuung des noch nicht ausgehärteten Materials höher ist. Dabei ist es bevorzugt, dass der Brechungsindex des Füllstoffs (bzw. ganz allgemein: eines partikel- oder faserförmigen Zusatzes) vor der Verfestigung um mindestens 0,02, stärker bevorzugt um mindestens 0,05 größer ist als der der Harzmatrix.

Die Brechzahl der Matrix kann dabei entweder über eine Matrixmodifikation selber ( z.B. durch Verwendung eines Materials wie in DE 102013108594 beschrieben) oder durch die Verwendung bestimmter, dispergierter Nanopartikel, wie z. B. $ZrO_2$, $TiO_2$, ZnO oder ZnS ($n_D$-Steigerung) bzw. z. B. $SiO_2$ ($n_D$-Senkung) (siehe Details weiter unten) an die Brechzahl bestimmter Partikel angepasst werden. Weiter enthalten sein können organische Strukturen, deren Brechzahl sich über eine strukturelle Änderung bei Belichtung ändert, wie z. B. Coumarine, Stilbene und Chalconderivate. Diese können den gleichen Effekt der Opazitätsänderung erzeugen. Die Brechzahldifferenz im ungehärteten Zustand führt dazu, dass das Material beim Drucken opaker ist. Diese Opazität hat wiederum positiven Einfluss auf die Formgenauigkeit in z-Achse (die fehlerhafte Durchpolymerisation). Besonders günstig für dentale Anwendungen ist daher ein gefülltes Material, das im fließfähigen, ungehärteten Zustand relativ opak ist, beim Aushärten jedoch durch Angleichung der Brechzahlen von Matrix und Füller transluzenter wird. Der Effekt ist also sowohl für die Formgenauigkeit als auch für die Anwendung von Vorteil.

Erfindungsgemäß konnte insgesamt festgestellt werden, dass zur Vermeidung oder Verringerung der FD von Formkörpern mit Brücken, Schrägen oder Überhängen das Badmaterial in verschiedener Weise modifiziert werden kann, insbesondere mit anorganischen und/oder organischen Photostabilisatoren (= z.B. Photoabsorber oder optischer Aufheller) (die wegen der in den hier für die 3D-Druckverfahren verwendeten Polymerisationswellenlängen im Grenzbereich sichtbar/UV hier auch als UV-Absorber/UV-Stabilisatoren bezeichnet werden,) wobei sich neben der Reduzierung der FD verschiedene weitere, teils überraschende Effekte ergeben können.

5.1 Nachbehandlungen der Formkörper gemäß Kapitel 5.:

I. Nachbehandlung für 3D-gedruckte Bauteile aus Polysiloxan mit LTPO und DBPO (Stäbchen für 3-Punkt-Biegeversuche und Brücken für die FD-Bestimmung): Falls nicht anders angegeben, wurden die 3D-gedruckten Bauteile in Isopropanol im Ultraschallbad gewaschen, das Isopropanol wurde mit Druckluft abgeblasen, und die Formkörper wurden für wenige min. bei 23 °C getrocknet, um restliches Lösemittel zu verdunsten, und schließlich 2 h bei 100°C im Ofen nachgehärtet.

II. Nachbehandlung für 3D-gedruckte Bauteile aus Polysiloxan mit LTPO, ohne DBPO (Brücken für die FD-Bestimmung): Falls nicht anders angegeben, wurden die 3D-gedruckten Bauteile in Isopropanol im Ultraschallbad gewaschen, das Isopropanol wurde mit Druckluft abgeblasen, und die Formkörper wurden für wenige min. bei ca. 23°C getrocknet, um restliches Lösemittel zu verdunsten, weiterhin im Ofen für 30 min. bei 40°C getrocknet und schließlich mit einem Blitzlichtgerät (G 171 Otoflash von NK Optik, 3000 Blitze, 5 min) unter Stickstoffatmosphäre nachgehärtet.

III. Nachbehandlung für 3D-gedruckte Bauteile aus Polysiloxan mit LTPO, ohne DBPO (Prüfstäbchen für 3-Punkt-Biegeversuche): Falls nicht anders angegeben, wurden die 3D-gedruckten Bauteile in Isopropanol im Ultraschallbad gewaschen, das Isopropanol wurde mit Druckluft abgeblasen, und die Formkörper wurden für wenige min. bei ca. 23 °C getrocknet, um restliches Lösemittel zu verdunsten, weiterhin im Ofen für 30 min. bei 40°C getrocknet und schließlich erst mit einem Blitzlichtgerät (G 171 Otoflash von NK Optik, 3000 Blitze, 5 min) unter Stickstoffatmosphäre und dann bei 100°C 2 h lang im Ofen nachgehärtet.

5.2 Konventionelle Herstellung von Prüfstäbchen für die Messung der mechanischen Eigenschaften:

a. Herstellung von Bauteilen aus Polysiloxan mit LTPO und DBPO: Analog zu 3.1.II.
b. Herstellung von Bauteilen aus Polysiloxan mit LTPO, ohne DBPO: Analog zu 3.1.I.

5.3 Verringerung der FD durch Transluzenz-Verringerung

Zur Messung der Transluzenz wurden eigens Plättchen hergestellt. Die Transluzenzplättchen besaßen einen Durchmesser von 18 mm und eine Höhe von 2 mm. Die Herstellung erfolgte mittels Formguss des jeweiligen Materials in einer Edelstahlform mit einer runden Aussparung, wobei die Ober- und Unterseite der Probenkörper jeweils von einer PET-Folie gefolgt von einer Glasplatte umgeben waren. (Ggf. wurden die Materialien für eine vollständige Blasenfreiheit entgast.) Bei Materialien, welche DBPO und LTPO enthielten, erfolgte die Aushärtung thermisch bei 100 °C für 4 h. Bei Materialien, welche nur LTPO enthielten, erfolgte eine lichtinduzierte Aushärtung für 2 x 120 s (Ober- und Unterseite) mit dem Dentalstrahler *Polofil® Lux* von *Voco*.

Die Transluzenz der Plättchen wurde mit Hilfe des Spektralphotometers *Color i7* der Firma *x-rite* gemessen, und zwar im sichtbaren Bereich in Abständen von 10 nm von 380 nm - 750 nm (für den Transluzenzwert wurde aus allen Werten zwischen 380 und 750 nm der Mittelwert gebildet.). Pro Material wurden 2 verschiedene Stellen eines Plättchens vermessen und daraus der Mittelwert gebildet.

In einer ersten Ausgestaltung von auf eine FD-Verringerung gerichteten Ausführungsformen der Erfindung wird dem Harzmaterial ein partikelförmiges Material zugesetzt, das eine vorzugsweise starke Abweichung der Brechzahl von der des Harzmaterials besitzt (und meist höher als die des Harzmaterials ist) und Lichtstreuung bewirkt. Durch die (meist starke) Lichtstreuung wird die Transluzenz des Materials verringert (das Material wird weiß/opak). Hierdurch wird verhindert, dass Lichtstrahlung beim 3D-Drucken weit in z-Richtung ins Material eindringen und damit über den Bereich des bereits gebildeten Formkörpers hinaus in unpolymerisiertes Badmaterial eindringen kann. Als partikelförmiges Material können anorganische Partikel dienen, beispielsweise aus Titandioxid, Zirkoniumoxid, Zinkoxid, Zinksulfid und/oder Siliciumdioxid, aber auch faserförmiges Material ist möglich.

Wenn die anorganischen Partikel einen nur geringen Primärpartikeldurchmesser, beispielsweise von etwa 5 bis etwa 100 nm, besitzen, müssen sie in agglomerierter Form vorliegen, damit der gewünschte Effekt eintritt.

Dieses Phänomen kann anhand der Verwendung von $TiO_2$ (im konkreten Beispiel wurde ein nanosphärisches Weißpigment mit einem Primärpartikeldurchmesser von 10 - 30 nm, vorliegend in Form von Agglomeraten, Firma io-litec nanomaterials, Heilbronn, untersucht) gezeigt werden. Die Agglomerate haben einen Durchmesser, der vom oberen nm-Bereich bis in den $\mu$m-Bereich reicht und streuen das Licht, wodurch es insgesamt zu einer nichtselektiven Lichtstreuung kommt, die das Komposit durch das austretende Streulicht weiß erscheinen lässt. Bedingt durch den großen Brechzahlunterschied der Harzmatrix und der $TiO_2$-Partikel ist dieses Verhalten sehr stark ausgeprägt, und es reichen sehr kleine Partikelmengen (z.B. 0,1 bis 1 Gew.-%, vorzugsweise ca. 0,5 Gew.-%) aus, um eine hohe Deckkraft zu erhalten.

5.3.1 Materialherstellung:

A. Im Grundharzsystem 1 wurde zuerst DBPO (2 Gew.-%) bei 40°C gelöst, danach LTPO (1 Gew.-%) bei 34 °C.
B. Im Grundharzsystem 1 wurde zuerst DBPO, dann LTPO gelöst wie für A. beschrieben. Das Material wurde anschließend mit 0,5 Gew.-% $TiO_2$ (Nanopartikel wie oben angegeben) versetzt, im Speedmixer (1 Min, 2000 U/Min) vorgemischt, dann mittels Dreiwalzwerk und nochmals gefolgt vom Speedmixer eingearbeitet.

Im unausgehärteten Zustand besaß das resultierende Materialsystem A eine Transluzenz von 100%, das resultierende Materialsystem B eine Transluzenz von nur 3 %. Im ausgehärteten Zustand besaß es eine Transluzenz von 84 % (ohne $TiO_2$) und 16 % mit $TiO_2$.

5.3.2 Ergebnisse

Bei einem Vergleich von Brücken, hergestellt nach Materialherstellung A. und B. und jeweils 3D-gedruckt, ergab sich Folgendes: Die Viskosität des Grundharzsystems ohne $TiO_2$-Absorber betrug 4,9 Pa s bei 25°C und 1,3 Pa s bei 40°C. Bei einer Schichtstärke von 100 $\mu$m ergab sich beim Drucken mit Belichtungszeiten von 24 s pro Schicht eine FD von 78 % für das Material ohne $TiO_2$ und eine FD von nur noch 2 % für das Material mit $TiO_2$, das mit 8 s pro Schicht (Schichtstärke = 100 $\mu$m) belichtet worden war. Bei jeweils derselben Schichtstärke und Belichtungsdauer wurden anhand von 3D-gedruckten Stäbchen Biegefestigkeiten von 102 MPa für das $TiO_2$-freie Material und immer noch 85 MPa für das mit $TiO_2$ versetzte Material ermittelt. Die E-Moduln lagen in beiden Fällen bei 2,2 GPa.

Das Ergebnis überrascht in positiver Weise: Während ohne Absorber der Überhang der Brücke fast doppelt so dick ist wie gewünscht (FD = 78 %), reduziert sich die FD bei Verwendung von $TiO_2$ auf nur noch 2 %. Es können somit beide Eigenschaften (gute Oberflächenqualität bei gleichzeitig hoher Maßhaltigkeit durch minimale FD) sehr gut kombiniert werden. Zudem ist die geringe erforderliche Belichtungszeit bei Verwendung von $TiO_2$ (nur 8 s) positiv zu werten, da sich dadurch die Prozesszeit niedrig halten lässt.

Anzumerken ist, dass die Festigkeiten des mit $TiO_2$ versetzten Materials allgemein geringer sind als die des Harzes ohne diesen Zusatz. Dies liegt daran, dass die Partikel nicht Oberflächenmodifiziert sind. Dieser Nachteil lässt sich dadurch überwinden, dass anstelle von rein anorganischen Partikeln solche mit einer geeigneten Oberflächenmodifizierung mit in das organische Netzwerk einpolymerisierbaren Gruppen, z.B. (Meth-)Acryl- oder Norbornenylgruppen, eingesetzt werden. Wenn derart oberflächenmodifizierte Partikel kleine Durchmesser wie die des hier in Rede stehenden Beispiels haben, streuen sie allerdings nicht, wie nachstehend in Abschnitt 5.4. gezeigt, da sie dann nicht agglomeriert, sondern dispergiert im Harz vorliegen. Deshalb sollten die oberflächenmodifizierten Partikel dann größere Durchmesser besitzen. Solche großen Partikel führen wie gewünscht zur Streuung, vorausgesetzt, dass sie eine ausreichend große Brechzahldifferenz zur Matrix aufweisen.

5.4 Verringerung der FD unter Beibehaltung der gewünschten Transluzenz

In einer zweiten Ausgestaltung dieser bevorzugten Ausführungsform der Erfindung wird es möglich, die FD zu senken, ohne dass die möglicherweise gewünschte hohe Transluzenz verloren geht. Dies gelingt mit dispergierten anorganischen Nanopartikeln wie solchen aus $ZrO_2$ ($ZrO_2$-NP) mit Primärpartikeldurchmessern von vorzugsweise ca. 5 bis 100 nm. Da die Nanopartikel dispergiert sind, resultiert eine hohe Transluzenz des Materialsystems. Die Funktion als Lichtabsorber rührt im Gegensatz zum vorherigen Beispiel nicht von Lichtstreuung/Opazität her (siehe G. Wypych, a.a.O).

5.4.1 Materialherstellung:

C. Im Grundharzsystem 1 wurde LTPO (2 Gew.-%) bei 40 °C gelöst. Die Nachbehandlung auch der gedruckten Stäbchen erfolgte abweichend vom herkömmlichen Prinzip nach Prinzip 5.1.II.

D. Komposit mit 30 Gew.-% $ZrO_2$-NP: LTPO wurde zum Grundharzsystem 1 gegeben wie für C. beschrieben. Anschließend wurden 30 Gew.-% der in Ethylacetat dispergierten $ZrO_2$-NP (Firma Pixelligent, Baltimore (USA), PixClear PCPB-2-50-ETA, Ø = 7 - 10 nm, zu 50 Gew.-% in Ethylacetat dispergiert) zugegeben. Diese sind silanisiert (Methacrylatfunktionalisiert). Nach dem Lösen des Initiators und nach vollständigem Dispergieren der Nanopartikel wurde das Lösemittel unter vermindertem Druck entfernt.

5.4.2 Ergebnisse

Bei einem Vergleich von Brücken (zur Bestimmung der FD) und Stäbchen (zur Bestimmung der mechanischen Eigenschaften), hergestellt nach Materialherstellung C. und D. und jeweils 3D-gedruckt, ergab sich Folgendes: Die Viskosität des Harzsystems C ohne $ZrO_2$-Absorber betrug 4,8 Pa.s bei 25°C und 1,2 Pa·s bei 40°C. Die Transluzenz lag bei 80 %. Bei einer Schichtstärke von 50 um ergab sich beim Drucken mit Belichtungszeiten von 3 s pro Schicht eine FD von 68 % für das Material ohne $ZrO_2$ (anstelle des Materials C. diente der FD- und Transluzenzmessung hier ein solches, das mit nur 1 Gew.-% LTPO hergestellt war). Die Viskosität des Harzsystems D mit $ZrO_2$-Absorber betrug 6,7 Pa·s bei 25°C und 1,8 Pa.s bei 40°C. Die Transluzenz lag bei 78 % (anstelle des Materials D diente der FD- und Transluzenzmessung hier ein solches, das mit nur 1 Gew.-% LTPO hergestellt war). Bei einer Schichtstärke von 100 $\mu$m ergab sich beim Drucken mit Belichtungszeiten von 10 s pro Schicht eine FD von nur noch 17 % für das Material mit $ZrO_2$. Bei einer Schichtstärke von 100 $\mu$m und einer Belichtungszeit von 8 s beim 3D-Druck wurde für das Material C eine Biegefestigkeit von 90 MPa und ein E-Modul von 2,1 GPa gemessen. Für das Material D wurde bei einer Schichtstärke von 25 $\mu$m und einer Belichtungszeit von nur 5 s im 3D-Druck eine Biegefestigkeit von 81 PMa und ein E-Modul von 2,4 GPa gefunden.

Die Erfinder konnten damit zeigen, dass dispergierte (isolierte!) anorganische Nanopartikel einen effektiven Einfluss auf die FD (im Beispiel nur 17 %, ein sehr guter Wert) haben und somit als geeignete Photoabsorber fungieren können. Erstmals können daher Materialsysteme mit einer hohen Transluzenz, ohne organischen Photoabsorber und dennoch deutlich reduzierter FD gedruckt werden. Zudem ist die mögliche geringe Belichtungszeit von nur 10 bzw. sogar 5 s, mit der bereits gute Oberflächeneigenschaften erreicht werden können, positiv.

Alternativ ist es möglich, die Transluzenz beizubehalten, indem ein Harz mit einer erhöhten Brechzahl eingesetzt wird, beispielsweise eines der Grundharze 1a bis 1d, 3 und 4 derart, dass die Brechzahl des Harzes und die Brechzahl der zugesetzten Partikel möglichst ähnlich ist. Dann ist es nicht erforderlich, dass dispergierte Nanopartikel mit dem Ziel der Brechzahländerung zugesetzt werden. Auch der Zusatz von agglomerierenden, streuenden Partikeln ist dann möglich.

5.5 Verringerung und Vergleichmäßigung der FD durch Zusatz eines organischen Photoabsorbers

Auch mit Hilfe von organischen Photoabsorbern kann die FD gesenkt werden. Organische Photoabsorber wirken z.B. über den Mechanismus der Energiedissipation. Diesbezüglich kann auf G. Wypych, Handbook of UV Degradation and Stabilization, ChemTec Publishing, Toronto 2015, S.34, 43-46 verwiesen werden.

Beispiele für organische Photoabsorber sind Benzophenone wie DHDMBP = 2,2'-Dihydroxy-4,4'-dimethoxy-benzophenon, Cyasorb UV-416 = 2-(4-Benzoyl-3-hydroxyphenoxy)ethylacrylat, Cyasorb UV-531 = 2-hydroxy-4-n-octoxy-benzophenon, Cyasorb UV-9 = 2-Hydroxy-4-methoxy-benzophenon, Chiguard BP-1 = 2,4-Dihydroxy-benzophenon, Chiguard BP-4 = 2-hydrox-4-methoxy-benzophenon-5-sulfonic acid oder Chiguard BP-2 = 2,2',4,4'-tetrahydroxybenzophenon und Benzotriazole wie Tinuvin 327 = 2-(3,5-Di-tert-butyl-2-hydroxyphenyl)-5-chloro-2H-benzotriazol, Chiguard 323 = 2-[3-(2H-Benzotriazol-2-yl)-4-hydroxyphenyl]ethyl methacrylat, Chiguard R-445 (Benzotriazol), Chiguard 5431 = 2,2'-Methylene bis(6-(2H-benzotriazol-2-yl) 4-,1,1,3,3,tetramethyl butyl)phenol, Tinuvin P = 2-(2'-hydroxy-5'-methylphenyl)-benzotriazol, Tinuvin 326 = 2-(5-chloro-2H-benzotriazol-2-yl)-6-(1,1-dimethylethyl)-4-methyl-phenol, Tinuvin 328 = 2-(2H-benzotriazol-2-yl)-4,6-ditertpentyl-phenol, Chiguard 5411 = 2-(2'-hydroxy-5'-tert-octylphenyl)-benzotriazol oder Chiguard 234 = 2-[2-hydroxy-3,5-di-(1,1-dimethylbenzyl)]-2H-benzotriazol.

Auch durch den Zusatz eines optischen Aufhellers wie TBT = 2,5-Thiophenediylbis(5-tert-butyl-1,3-benzoxazol), Uvitex OB-ONE = 2,2'-(1,2-ethylenediyldi-4,1-phenylene)bisbenzoxazol, Eutex 127 = 1,1'-Biphenyl-4,4'-bis[2-(methoxyphenyl)ethenyl], Eutex KCB = 2,2'-(1,4-Naphthalenediyl)bis-benzoxazole, Eutex CBS = 1,1'-Biphenyl-4,4'-bis[2-(sulphophenyl)-ethenyl]disodium salt, Eutex KSN = 4,4-bis (5-methyl-2-benzoxazol)-ethylene oder Tris(dibenzoylmethane) mono(1,10-phenanthroline)europium(III) lässt sich eine Verringerung der FD erreichen.

Insbesondere sind organische Photostabilisatoren besonders bevorzugt, welche reaktive Gruppen besitzen, z. B. (Meth)Acrylatgruppen, um an die Matrix kovalent anzubinden (z.B. Chiguard 323 und Cyasorb UV-416).

5.5.1 Probenherstellung:

LTPO (1 Gew.-%) und ggf. DBPO (2 Gew.-%) wurden in den Grundharzsystemen 1 und 2 bei erhöhter Temperatur gelöst und im Anschluss ggf. der entsprechende Absorber ebenso bei erhöhter Temperatur von 40 °C gelöst. Abweichende Nachbehandlung der Brücken mit/ohne DHDMBP, ohne DBPO: Alle 3D-gedruckten Bauteile wurden in Isopropanol im Ultraschallbad gewaschen, mit Druckluft abgeblasen, für wenige Min getrocknet bei RT für ein restliches Verdunsten des Lösemittels und mit Blitzlichtgerät (3000 Blitze, 5 Min) nachgehärtet. Abweichende Nachbehandlung der Stäbchen mit/ohne TBT: siehe oben, Nachbehandlung 5.1.II

5.5.2 Ergebnisse:

(a) Ergebnisse mit Grundharzsystem 1: Das hier als Vergleich herangezogene

Grundharzsystem 1 mit 1% LTPO und 2% DBPO besaß eine Transluzenz von 82 % und - bei einer Schichtdicke von 100 μm und einer Belichtungszeit von 20 s pro Schicht beim Drucken - eine FD von 60 %. Die Biegefestigkeit des erhaltenen Formkörpers - bei gleicher Belichtungszeit und Schichtstärke - betrug 98 MPa (bei konventioneller Herstellung ohne erfindungsgemäße Drucktechnik: 90 MPa) und einen E-Modul von 2,1 GPa (bei konventioneller Herstellung ohne erfindungsgemäße Drucktechnik: 2,2 GPa). Wurden diesem System 1 Gew.-% DHDMBP zugesetzt, sank die Transluzenz nur geringfügig, nämlich auf 78 %. Die FD sank auf 17 %, wobei die Belichtungszeit der 100 μm dicken Schichten auf 52 s erhöht worden war. Die Biegefestigkeit des mit 3D-Druck hergestellten Materials - bei gleicher Belichtungszeit und Schichtstärke - lag bei immer noch 96 MPa, der E-Modul unverändert bei 2,1 GPa. Beim Einsatz eines Harzes, bei dem im Vergleich zu den obigen Materialien das DBPO weggelassen war, sank die FD von 121 % (beim Harz ohne DHDMBP) (Belichtungszeit = 8 s, Schichtstärke = 100 μm) auf 16 %, wenn dem Harz DHDMBP zugegeben worden war (Belichtungszeit = 20 s, Schichtstärke = 100 μm). Wurden diesem Harz statt DHDMBP 0,0040 mmol/g TBT zugesetzt, so sank die FD auf Werte um 20% (gemessen: 23 % bei einer Schichtstärke von 25 μm und einer Belichtungszeit von 5 s und 17% bei einer Schichtstärke von 50 μm und einer Belichtungszeit von 10 s). Auch die Werte für Biegefestigkeit bzw. E-Modul waren gut; bei einem System, dem neben TBT 2% LTPO zugesetzt worden waren, wurden 80 MPa bzw. 1,9 GPa gemessen (Schichtstärke = 25 μm; Belichtungszeit = 6 s).

Das Materialsystem aus Grundharz 1 mit 1 Gew.-% LTPO und 2 Gew.-% DBPO wurde weiterhin ohne und mit 1 Gew.% DHDMBP auf den Einfluss der Belichtungsdauer hin untersucht. Dabei zeigte sich, dass für das DHDMBP-freie Material bei Zunahme der Belichtungszeit zwar die Oberflächenqualität zunahm; gleichzeitig nahm jedoch auch die FD zu (bei einem Anstieg von 12 auf 20 s pro Schicht von 36 % auf 60 %). Enthält das Material dagegen 1 Gew.-% DHDMBP zusätzlich, so erhält man eine gleichbleibend gute Oberflächenqualität, desgleichen auch eine gleichbleibend niedrige FD (ca. 17 % im Bereich zwischen 44 und 52 s Belichtungsdauer pro Schicht) (die Ergebnisse sind in Figur 4 dargestellt, siehe die Pfeile). Durch den Zusatz von DHDMBP kann man also Schwankungen während des 3D-Druckprozesses, die z.B. durch eine schwankende Lichtintensität bewirkt werden, ausgleichen, und zwar sowohl bezüglich der Oberflächenqualität als auch bezüglich der FD. Dieses Prinzip ist auf andere Materialsysteme mit geringer FD übertragbar.

(b) Ergebnisse mit Grundharzsystem 2:

Grundharzsystem 2 mit 2 Gew.-% LTPO, ohne DBPO: LTPO wurde im Harzsystem 2 bei erhöhter Temperatur gelöst und im Anschluss wurde der Absorber TBT in einer Menge von 0,0010 mmol/g ebenso bei erhöhter Temperatur von 35 °C gelöst. Die Viskosität des Materials betrug 33 Pa·s bei 25°C und 5,8 Pa.s bei 40°C. Die 3D-Druckversuche erfolgten mit einer Schichtstärke von 50 $\mu$m mit 16 s Belichtungszeit pro Schicht. Hierfür konnte eine FD von nur 20 % ermittelt werden. Die so hergestellten Prüfkörper besaßen eine Biegefestigkeit von 105 MPa und einen E-Modul von 3,2 GPa.

Erfindungsgemäß zeigt sich also, dass auch mit organischen Photoabsorbern die FD erheblich reduziert werden kann. Es ergeben sich sehr gute Ergebnisse bei Verwendung von 1 Gew.-% DHDMBP mit einer FD von 17 (mit DBPO) bzw. 16 % (ohne DBPO) und bei Verwendung von nur 0,0040 mmol/g TBT mit einer FD von ebenso 17 %. Dabei sind vor allem die Belichtungszeiten von 20 s (bei Verwendung von DHDMB ohne DBPO) und 10 s für Grundharzsystem 1 und 16 s für Grundharzsystem 2 (bei Zusatz von TBT) sehr gering, was eine schnelle Herstellung der Formkörper ermöglicht.

Ebenfalls positiv zu werten ist, dass der Photoabsorber DHDMBP keine negativen Auswirkungen auf die mechanischen Eigenschaften der Materialsysteme hat: Die Festigkeit ohne und mit Absorber ist ungefähr gleich groß (98 MPa ohne Absorber, 96 MPa mit Absorber).

Weiterhin auffällig ist der große Unterschied der FD des Grundharzsystems 1 ohne Photoabsorber mit (FD = 60 %) und ohne (FD = 121 %) DBPO. Daraus lässt sich schließen, dass auch DBPO überaschenderweise selbst als Photoabsorber wirkt und die FD erheblich reduziert.

Außerdem ergibt sich aus den Versuchen, dass bei Verwendung des Grundharzsystems 2 ein wesentlich geringerer Zusatz an organischem Photoabsorber genügt, um einerseits eine vergleichbare FD, andererseits aber sogar bessere mechanische Werte (eine Biegefestigkeit von 105 MPa!) zu erreichen. Die hergestellten Brücken besaßen für das Auge eine hervorragende Transluzenz, auch wenn diese nicht vermessen wurde.

5.6 Verringerung der FD durch Zusatz einer Kombination aus anorganischem und organischem Photoabsorber

Die FD lässt sich besonders gut dadurch verringern, dass eine Kombination aus anorganischem und organischem Photoabsorber eingesetzt wird.

Probenherstellung

Im Grundharzsystem 1 wurden bei 40°C zuerst 2 Gew.-% LTPO und sodann 0,0035 mmol/g TBT gelöst. Es wurden wie oben gezeigt 30 Gew.-% methacrylatfunktionalisierte $ZrO_2$-Partikel (Firma Pixelligent, PixClear PCPB-2-50-ETA, Ø = 7 - 10 nm, zu 50 Gew.-% in Ethylacetat dispergiert) eingearbeitet. Das resultierende Komposit wurde mit einer Schichtstärke von 25 $\mu$m mit einer Belichtungszeit von 5 s pro Schicht gedruckt. Bei den konventionell hergestellten Stäbchen wurde abweichend von der üblichen Belichtungszeit mit 2 x 120 s (Oberseite + Unterseite) belichtet. Die Biegefestigkeit lag bei 70 MPa (zum Vergleich: bei konventioneller Herstellung lag sie bei 72 MPa), der E-Modul bei 2,3 GPa (bei konventioneller Herstellung: 2,1 GPa). Bei einer Belichtungszeit von 16 s pro Schicht, die 50 $\mu$m dick war, konnte eine FD von nur 13 % ermittelt werden.

Zum Vergleich: Wurden dem Grundharzsystem neben LTPO 0,0040 mmol/g TBT zugesetzt, aber keine $ZrO_2$-Partikel, lag der Wert der FD bei 23 % (1 Gew.-% LTPO; Schichtdicke 25 $\mu$m) und 17 % (1 Gew.-% LTPO; Schichtdicke 50 $\mu$m), die Biegefestigkeit bei 80 MPa (2 Gew.-% LTPO) und der E-Modul bei 1,9 GPa (2 Gew.-% LTPO), wie bereits oben unter 5.5.2 (a) angegeben.

Es zeigt sich also, dass mittels Kombination aus organischem und anorganischem Absorber bei transluzenten Materialien mit einer FD von nur 13 % ein noch besseres Ergebnis erzielt werden kann.

6. Nachbehandlungsverfahren

6.1 Nachbehandlungsverfahren für eine Verbesserung der Formkörper-Oberfläche

6.1.1 Badmaterial mit einer Kombination aus Photo- und thermischem Initiator

Als Badmaterial diente das Grundharzsystem 1 mit 1 Gew.-% LTPO und 2 Gew.-% DBPO.

Die Nachbehandlung erfolgte gemäß I., wie unter 5.1 angegeben. (das Waschen im Ultraschallbad erfolgte für 60 s).

Die Nachbehandlungsprozedur stellt sicher, dass bei Formkörpern aus diesem Material keine Klebschicht mehr vorhanden ist. Die Biegefestigkeit lag wie erwähnt bei 102 MPa, der E-Modul bei 2,2 GPa.

Diese Nachbehandlungsprozedur ist analog auf alle weiteren Materialzusammensetzungen (z.B. mit Lichtabsorber, mit Partikel, mit anderer Matrix) anwendbar.

6.1.2 Badmaterial nur mit Photoinitiator, ohne thermischen Initiator

Als Badmaterial diente das Grundharzsystem 1 mit 2 Gew.-% LTPO, einmal ohne und einmal mit 0,0035 mmol/g TBT. Die Nachbehandlung erfolgte gemäß II. wie unter 5.1. angegeben (das Trocknen an Luft erfolgte für 5 min).
Diese Nachbehandlungsprozedur ist analog auf alle weiteren Materialzusammensetzungen (z.B. mit Lichtabsorber, mit Partikel, mit anderer Matrix) anwendbar.
Diese Nachbehandlungsprozedur stellt sicher, dass bei Formkörpern aus den genannten Materialien die Klebschicht vollständig beseitigt und damit die Oberfläche klebfrei ist. Die Biegefestigkeiten der gebildeten Formkörper lagen bei 90 MPa für das Grundharzsystem ohne Photoabsorber und bei 80 MPa für das Grundharzsystem mit TBT. Die E-Moduln lagen bei beiden bei 1,9 GPa.

6.2 Nachbehandlungsverfahren für eine Verbesserung des Polymerisationsumsatzes

Als Badmaterial diente das Grundharzsystem 1 mit 2 Gew.-% LTPO. einmal ohne und einmal mit 0,0035 mm/g TBT.
Nachhärtungsprozedur: Waschen in Isopropanol im Ultraschallbad (50 s) -> Trocknen mit Druckluft -> Trocknen an Luft bei RT (5 Min) -> Trocknen im 40 °C-Ofen (30 Min) -> Nachhärtung mit Blitzlichtgerät an $N_2$-Atmosphäre (3000 Blitze, 5 Min) $\rightarrow$

    a) Nachhärtung für 2 h im 100 °C-Ofen, vorgeheizt
    b) Nachhärtung mit UV-Strahler (UV-LED-eco, Hönle) (5 Min)

Für die Variante (a) ergab sich ein Umsatz von 88% (ohne TBT) bzw. 85% (mit TBT). Für die
Variante (b) lag der Umsatz bei 87% (ohne TBT) bzw. 73% (mit TBT). Obwohl das Material nur Photoinitiator enthielt, konnte durch eine zusätzliche Nachbehandlung also ein sehr hoher Umsatz von bis zu knapp 90 % erzielt werden. Das Vorhandensein von Photoabsorber spielte dabei kaum eine Rolle, genausowenig wie das gewählte Verfahren (Nachhärtung thermisch oder mit UV-Strahlung).
Diese Nachbehandlungsprozedur ist analog auf alle weiteren Materialzusammensetzungen (z.B. mit Lichtabsorber, mit Partikel, mit anderer Matrix) anwendbar.

7. Beispiele für die Herstellung komplexer Bauteilgeometrien

Aus Fig. 5 lässt sich ablesen, welch komplexe Geometrien von Formkörpern mit dem erfindungsgemäßen Verfahren möglich sind. Die Formkörper waren aus Grundmaterial 1 mit 2 Gew.-% LTPO und 0,0035 mmol/g TBT hergestellt. Die Schichtstärke betrug 50 $\mu$m. Für die Gitter mit einer Seitenlänge von 1 cm wurde jede Schicht 18 s lang belichtet; der Druck dauerte ca. 1h 30 Min. Für das Gitter mit einer Seitenlänge von 2 cm wurde eine Belichtungszeit von 16 s pro Schicht gewählt; die Druckdauer betrug ca. 3 h. Die Formkörper wurden nach dem Drucken im Ultraschallbad in Isopropanol gewaschen, wenige Min. bei Umgebungstemperatur getrocknet, um restliches Lösemittel zu entfernen, weiterhin im Ofen bei 40°C 30 Min lang getrocknet und schließlich mit einem Blitzlichtgerät in $N_2$-Atmosphäre (3000 Blitze, 5 Min) nachgehärtet.

8. Anpassung der mechanischen Eigenschaften und der Transluzenz - Weitere gefüllte Harzsysteme

Durch den Einsatz von Kompositen, hergestellt durch eine Kombination der Harzsysteme mit verschiedenen Füllstoffen, lassen sich weitere Eigenschaften der Formkörper beeinflussen.

8.1. Füllung mit Nanopartikeln (Nanokomposite)

Als Beispiele hierfür wurde der Zusatz von Nanopartikeln ($SiO_2$ und $ZrO_2$) als Füllstoffe untersucht.

8.1.1 Nanokomposit mit $SiO_2$-Nanopartikeln ($SiO_2$-NP) als Badmaterial

8.1.1.1 Als Nanopartikel dienten $SiO_2$-NP des Chemiewerks Bad Köstritz, Köstrosol 3550, Ø = 50 nm, zu 50 Gew.-% dispergiert in Wasser, unsilanisiert (Hydroxygruppen auf der Oberfläche). Diese Partikel wurden in üblicher Weise silanisiert.

8.1.1.2 Kompositzusammensetzung und -herstellung eines Nanokomposits mit einem Füllstoffgehalt von 20 Gew.-% $SiO_2$-NP (silanisiert):

Zuerst wurden 2 Gew.-% DBPO, sodann Grundharzsystem 1 und anschließend 1 Gew.-% LTPO in EtOH gelöst. Anschließend wurden die in Ethanol dispergierten $SiO_2$-Nanopartikel in einer solchen Menge zugesetzt, dass das entstehende Nanokomposit 20 Gew.-% dieser Nanopartikel enthielt. Das Komposit wurde 2 h gerührt, und das Lösemittel wurde unter vermindertem Druck entfernt. Zum Vergleich wurde das Grundharzsystem 1 mit denselben Komponenten, jedoch ohne Nanopartikel hergestellt.

Die Viskosität des ungefüllten Grundharzsystems wurde mit 4,9 Pa.s bei 25°C und mit 1,3 Pa.s bei 40°C, die Transluzenz mit 84 % ermittelt. Die Viskosität des mit 20 Gew.-% gefüllten Nanokomposits betrug bei den oben genannten Temperaturen 12 bzw. 2,9 Pa·s, die Transluzenz 69%. Die erfindungsgemäß gedruckten Formkörper (Schichtstärke jeweils 100 $\mu$m, Belichtungszeit 24 s für das ungefüllte Harz, 17 s für das Nanokomposit) besaßen eine Biegefestigkeit von 102 MPa (ungefüllt, siehe oben) bzw. 97 MPa (Nanokomposit) und einen E-Modul von 2,2 GPa (ungefüllt, siehe oben) bzw. 3,1 GPa (Nanokomposit). Für konventionell hergestellte Formkörper des Nanokomposits wurden eine Biegefestigkeit von 98 MPa und ein E-Modul von 2,9 GPa ermittelt.

Durch die Zugabe von dispergierten Nanopartikeln lässt sich also eine gute Festigkeit erzielen. Zudem konnte für das Nanokomposit eine Transluzenz von 69% aufgefunden werden. Man kann mit Hilfe von dispergierten Nanopartikeln also Formkörper mit sehr guten Festigkeiten und E-Moduln erzeugen, die gleichzeitig eine hohe Transluzenz besitzen. Das macht sie für dentale Applikationen hoch attraktiv.

8.1.2 Nanokomposit mit $ZrO_2$-NP als Badmaterial

Unter Abschnitt 5.4 wurde die Verringerung der FD unter Beibehaltung der gewünschten Transluzenz durch den Zusatz dispergierter, funktionalisierter $ZrO_2$-Nanopartikeln beschrieben. Die Erfinder konnten feststellen, dass derartige Nanopartikel außer zur Verringerung der FD auch zur Brechzahlanpassung genutzt werden können. Folgende Harze/ Komposite wurden hierfür hergestellt:

C. Grundharzsystem 1 wie unter Abschnitt 5.4.1 C angegeben,
D. Komposit mit 30 Gew.-% $ZrO_2$-NP wie unter Abschnitt 5.4.1 D angegeben
E. Komposit mit 30 Gew.-% $ZrO_2$-NP und 0,0035 mmol/g TBT wie unter Abschnitt 5.6 angegeben.

Die Viskosität, die Transluzenz, die FD, die Biegefestigkeit und der E-Modul des Grundharzsystems ohne TBT, mit und ohne Nanopartikel, sind in den Abschnitten 5.4.2 und 5.6 angegeben. Die Brechzahl wurde für das nanopartikelfreie Grundharzsystem 1 vor dem Belichten bei 1,479, nach dem Aushärten bei 1,512 ermittelt. Das Komposit D. besaß unausgehärtet eine Brechzahl von 1,521, nach dem Aushärten von 1,544. Diese Werte zeigen, dass die Brechzahl des Grundharzsystems durch den Einsatz der Zirkoniumdioxid-Nanopartikel deutlich gesteigert werden kann. Das ist ein Effekt, der insbesondere dann zum Tragen kommen kann, wenn weitere Füllstoffe eingesetzt werden sollen und eine Brechzahlanpassung von Matrix und Füllstoffen vorgenommen werden soll (durch die Dispergierung der Nanopartikel wirken diese im Hinblick auf die optischen Eigenschaften wie ein Bestandteil der Matrix, da sie das Licht nicht streuen.) Weiterhin positiv ist die festgestellte lange Lagerstabilität der Nanokomposite von mindestens 10 Monaten.

8.2. Makrokomposite

Probenherstellung:

A. Grundharzsystem 1 wie unter Abschnitt 5.3.1 A angegeben
F. Komposit aus Grundharzsystem 1. mit 40 Gew.-% Dentalglaspartikeln (DGP): Im Grundharzsystem 1 wurden 2 Gew.-% DBPO und anschließend 1 Gew.-% LTPO bei 40 °C gelöst. Anschließend wurden 40 Gew.-% Dentalglaspartikel (DGP: Schott, G018-307 mit Ø = 0,7 $\mu$m, silanisiert) zugegeben und mittels Dreiwalzwerk homogen eingearbeitet.

Charakterisierung: Für das Makrokomposit F. wurde eine Viskosität von 22 Pa.s bei 25°C und von 5,3 Pa·s bei 40°C bestimmt. Es lässt sich also sehr gut im erfindungsgemäß einsetzbaren Verfahren nutzen. Die Transluzenz sank durch den Zusatz der Dentalglaspartikel nur geringfügig, nämlich von 82% auf 75%. Die Biegefestigkeit und der E-Modul der mit dem erfindungsgemäßen Verfahren hergestellten Formkörper des Materials F. wurden mit 113 MPa bzw. 3,5 GPa bestimmt. Zum Vergleich: bei konventioneller Herstellung betrugen die Biegefestigkeit 112 MPa und der E-Modul 3,6 GPa. Bei einem Füllstoffgehalt von 40 Gew.-% ist also eine substantielle Festigkeitssteigerung zu beobachten (Werte für das System A. siehe Abschnitt 5.3.2).

8.3 Nanohybridkomposite mit Nanopartikeln und größeren Partikeln

8.3.1 Nanohybridkomposit mit $SiO_2$-Nanopartikeln und Dentalglaspartikeln Probenherstellung:

A. Grundharzsystem 1 wie unter Abschnitt 5.3.1.A angegeben.

G. Komposit aus Grundharzsystem A. mit $SiO_2$-Nanopartikeln (dispergiert, silanisiert, Fa. Nissan Chemical Industries, MEK-AC-4130Y, Partikelgröße 40 - 50 nm) und Dentalglaspartikeln (silanisiert, Fa. Schott, Typ G018-307, Primärpartikeldurchmesser 0,7 $\mu$m): LTPO und DBPO wurden in EtOH gelöst, anschließend wurde das Grundharzsystem 1 darin ebenso gelöst, derart, dass LTPO mit 1 Gew.-% und DBPO mit 2 Gew.-%, bezogen auf das Grundharz, vorhanden waren. Anschließend wurden in Methylethylketon dispergierte $SiO_2$-Nanopartikel zugegeben. Nach dem Vermischen und Homogenisieren (zur homogenen Verteilung der Partikel in der Harzmatrix) wurde das Lösemittel unter vermindertem Druck entfernt. Anschließend wurden die Dentalglaspartikel derart zugegeben und mittels Dreiwalzwerk homogen eingearbeitet, dass die verschiedenen Partikel im Gewichtsverhältnis von 29 : 71 ($SiO_2$-NP : Dentalglaspartikel) vorlagen und ein Gesamtfüllstoffgehalt von 60 Gew.-% resultierte.

Charakterisierung: Die Viskosität des Komposits G. betrug bei 25°C 104 Pa.s und bei 40°C 22 Pa.s. Seine Transluzenz lag noch bei 38%. Die Biegefestigkeit und der E-Modul der mit dem erfindungsgemäßen Verfahren hergestellten Formkörper aus dem Komposit G. betrugen 142 MPa bzw. 5,5 GPa und erreichen damit ausgezeichnete Werte.

Die Erfinder konnten insgesamt feststellen, dass sich Komposite mit sehr hohen Füllstoffgehalten (bis zu 60 Gew.-% / 40 Vol.-% wurden in mehreren Versuchen untersucht) drucken lassen, wobei Viskositäten von bis zu 104 Pa·s bei 25 °C immer noch handhabbar sind. Günstig ist jedoch ggf. auch die Nutzung des erfindungsgemäßen Verfahrens bei leicht erhöhten Temperaturen (z.B. in einem Heizbad).

3D-gedruckte Nanophybridkomposite erreichen hohe mechanische Eigenschaften (weit über die des ungefüllten Vergleichsmaterials hinaus), wie die gemessenen Biegefestigkeiten bis 142 MPa und E-Moduln bis zu 5,5 GPa zeigen. Biegefestigkeiten für permanenten Zahnersatz erfordern etwa 150 MPa, z. B. für eine Einzelkrone. Die hier festgestellten Werte - für noch nicht optimierte Komposite - zeigen, dass sich diese Werte mit dem erfindungsgemäßen Verfahren ohne weiteres realisieren lassen.

8.3.2. Nanohybridkomposit mit $ZrO_2$-Nanopartikeln, Dentalglaspartikeln und organischem Photoabsorber

Probenherstellung:

C. Grundharzsystem 1 wie unter Abschnitt 5.4.1 C angegeben
H. 0,0035 mmol/g TBT wurden zum Harzsystem C (enthält 2 Gew.-% LTPO). gegeben. Anschließend wurden zu 50 Gew.-% in Ethylacetat dispergierte $ZrO_2$-NP (silanisiert, Fa. Pixelligent, PixClear PCPB-2-50-ETA, Partikelgröße 7 - 10 nm) ebenfalls zugegeben. Nach dem Lösen von Initiator und Photoabsorber und nach vollständigem Dispergieren der Nanopartikel wurde das Lösemittel unter vermindertem Druck entfernt. Anschließend wurden die Dentalglaspartikel (DGP) (silanisiert, Fa. Schott, Typ GM27884, Primärpartikeldurchmesser von 0,7 und 3 $\mu$m im Verhältnis 1 : 2) im Verhältnis $ZrO_2$-NP : DGP 0,7 $\mu$m : DGP 3 $\mu$m = 1 : 0,90 : 1,80 nacheinander zugegeben und jeweils mittels Dreiwalzwerk homogen eingearbeitet, derart, dass ein Gesamtfüllstoffgehalt von 45 Gew.-% erreicht wurde.

Charakterisierung: Die Viskosität des Komposits H. betrug bei 25°C 15 Pa.s und bei 40°C 3,8 Pa·s, ist also erstaunlich niedrig. Die Transluzenz dieses Materials lag bei 45%. Aus dem Komposit wurde mit dem erfindungsgemäßen Verfahren durch Belichten von jeweils 50 $\mu$m dicken Schichten ein Formkörper hergestellt. Es wurde eine FD von nur 12 % beobachtet, was als besonders positiv zu bewerten ist. Dabei war eine Belichtungszeit von nur 12 s pro Schicht ausreichend. Ebenfalls positiv war die Bauteilqualität zu bewerten: Der Formkörper besaß glatte Oberflächen sowie spitze Kanten und Ecken.

Insgesamt ist anzumerken, dass sich mit dem Einsatz von Grundharzsystemen, deren Brechungsindex soweit wie möglich an den der verwendeten Füllstoffe angepasst ist, die Transluzenz stark verbessern lässt. Dies gelingt vorzugsweise durch den Zusatz von arylgruppenhaltigen Komponenten, wie oben erwähnt. Dadurch lassen sich transluzente Formkörper mit gleichzeitig hohen Werten für Biegefestigkeit und E-Modul erhalten.

Neben den oben beschriebenen Ausführungsformen der Erfindung umfasst diese zusätzlich eine solche, die - entgegen den obigen Erläuterungen - auch Silane mit nur einer hydrolysierbaren Gruppe aufweisen kann.

Demnach umfasst die Erfindung (i) ein Verfahren zum Herstellen eines Formkörpers mit Hilfe eines strahlungsinduzierten Druckverfahrens nach der Technik des Ein-Photonen-Polymerisations-Prozesses, dadurch gekennzeichnet, dass

- der Formkörper durch Verfestigen eines flüssigen oder viskosen Materials erzeugt wird, welches eine Polysiloxan-Komponente, die unter hydrolytischer Kondensation eines oder mehrerer monomerer Silane mit mindestens einem organisch polymerisierbaren Rest, der über Kohlenstoff an das Siliciumatom gebunden ist, gebildet wurde und einen Initiator und/oder Katalysator für die strahlungsinduzierte Polymerisation des organisch polymerisierbaren Restes enthält, und
- die Verfestigung dadurch erfolgt, dass Licht einer Strahlungsquelle auf einen Bereich einer Oberfläche eines Substrats gerichtet wird, wobei eine dort befindliche Schicht des flüssigen oder viskosen Materials durch die Einwirkung von Strahlung einer organischen Polymerisation unterworfen und dadurch verfestigt wird, worauf nacheinander weitere Schichten des flüssigen oder viskosen Materials, die sich jeweils auf der Schicht des zuletzt verfestigten Materials befinden, mit Hilfe dieser Strahlungsquelle verfestigt werden.

Dieses Verfahren kann in drei Varianten eingesetzt werden. Jede dieser Varianten kann als solche genutzt oder mit einer zweiten Variante kombiniert werden; auch ist die Kombination aller drei Varianten möglich.

Das für das Verfahren (i) genutzte flüssige oder viskose Material enthält in der ersten Variante dieses Verfahrens ein partikelförmiges oder in der Polysiloxan-Komponente gelöstes Material, das in der Lage ist, Licht einer Wellenlänge zu absorbieren, die der Wellenlänge der eingesetzten Strahlungsquelle entspricht. Bei dem partikelförmigen oder in der Polysiloxan-Komponente gelösten Material kann es sich um ein gelöstes, fluoreszierendes Material, einen anorganischen, partikelförmigen Feststoff, vorzugsweise $ZrO_2$ mit Partikelgrößen im Bereich von 5 bis 100 nm, besonders bevorzugt 5 bis 20 nm, und/oder eine organische, in der Polysiloxan-Komponente gelöste Verbindung handeln.

In einer zweiten Variante dieses Verfahrens (i) enthält die Polysiloxan-Komponente Arylgruppen, die an über Kohlenstoffatome an Silicium gebundenen Resten gebunden sind.

In einer dritten Variante dieses Verfahrens (i) enthält die Polysiloxan-Komponente Phosphonsäure-, Phosphinsäure-, Phosphat-, Sulfonsäure-, Sulfinsäure- und/oder Carbonsäuregruppen, die jeweils an über Kohlenstoffatome an Silicium gebundenen Resten gebunden sind.

Die genannte zusätzliche Ausführungsform der Erfindung umfasst neben dem Verfahren (i) auch (ii) einen Formkörper auf Basis eines organisch polymerisierten Kieselsäure(hetero)-polykondensats, welches durch organische Polymerisation einer Polysiloxan-Komponente erzeugt wurde, die unter hydrolytischer Kondensation eines oder mehrerer monomerer Silane mit mindestens einem organisch polymerisierbaren Rest, der über Kohlenstoff an das Siliciumatom gebunden ist, gebildet wurde. Dieser Formkörper besitzt eine Biegefestigkeit, bestimmt mit einem 3-Punkt-Biegeversuch gemäß Prüfnorm DIN EN ISO 4049: 2009 mit der Universalprüfmaschine Z100 der Firma Zwick/Roell, mit den Änderungen, dass anstelle einer Wasserlagerung eine Trockenlagerung voranging und die Vorschubgeschwindigkeit 3 mm/Min betrug, von mindestens 60 MPa, vorzugsweise von mindestens 80 MPa und ganz besonders bevorzugt von mindestens 90 MPa und/oder einen E-Modul, im linearen Bereich der Spannungs-Dehnungs-Kurve zwischen 10-20 MPa über die Sekante bestimmt, von mindestens 1,4 GPa, vorzugsweise von mindestens 1,8 GPa und besonders bevorzugt von mindestens 2,1 GPa, aufweist. Der Formkörper gemäß (ii) kann nach dem Verfahren gemäß (i) hergestellt sein.

Der Formkörper gemäß der letztgenannten Ausführungsform (ii) kann in einer Raumrichtung aus einzelnen Schichten mit einer Dicke im Bereich von 10 bis 150 $\mu$m aufgebaut sein, oder er kann durch kontinuierliches Belichten entstanden sein. Vorzugsweise besitzt er eine Transluzenz von mindestens 45 %, stärker bevorzugt von mindestens 55 %, noch stärker bevorzugt von mindestens 65 % und besonders bevorzugt von ca. 75 %. Seine Biegefestigkeit liegt vorzugsweise bei mindestens 100 MPa und/oder sein E-Modul liegt vorzugsweise bei mindestens 3,2 GPa.

Entsprechend der Möglichkeit, ihn nach Verfahren (i) herzustellen, kann der Formkörper in einer ersten Variante anorganischen, partikelförmigen Feststoff, vorzugsweise $ZrO_2$ mit Partikelgrößen im Bereich von 5 bis 100 nm, besonders bevorzugt 5 bis 20 nm, und/oder eine organische, in der Polysiloxan-Komponente gelöste Verbindung enthalten.

In einer zweiten Variante kann seine Polysiloxan-Komponente Arylgruppen enthalten, die an über Kohlenstoffatome an Silicium gebundenen Resten gebunden sind. In einer dritten Variante kann seine Polysiloxan-Komponente Phosphonsäure-, Phosphinsäure-, Phosphat-, Sulfonsäure-, Sulfinsäure- und/oder Carbonsäuregruppen enthalten, die jeweils an über Kohlenstoffatome an Silicium gebundenen Resten gebunden sind.

Jede dieser Varianten kann als solche genutzt oder mit einer zweiten Variante kombiniert werden; auch ist die Kombination aller drei Varianten möglich.

Der Formkörper der letztgenannten Ausführungsform gemäß (ii) kann neben dem organisch polymerisierten Kieselsäure(hetero)polykondensat mindestens einen Füllstoff enthalten, ausgewählt unter Füllstoffen aus agglomerierten oder dispergierten anorganischen Nanopartikeln mit Partikelgrößen im Bereich von 5 bis 100 nm, darunter vorzugsweise solchen aus $ZrO_2$, und Partikeln im Größenbereich von 150 nm bis 5 $\mu$m und Kombinationen davon, wobei der Füllstoffgehalt des Formkörpers vorzugsweise bei mindestens 15 Gew.-%, vorzugsweise bei 20 Gew.-% bis 65 Gew.-%, liegt und wobei der Formkörper stärker bevorzugt eine Biegefestigkeit von mindestens 130 MPa, noch stärker bevorzugt von mindestens 150 MPa, und/oder einen E-Modul von mindestens 5,0 GPa aufweist. Stattdessen oder zusätzlich kann der Formkörper dispergierte anorganische Nanopartikel mit Partikelgrößen im Bereich von 5 bis 100 nm und Partikel im Größenbereich von 150 nm bis 5 $\mu$m enthalten und/oder ein - bei Bedarf fluoreszierendes - Material aufweisen, das in der Lage ist, Licht im Wellenlängenbereich von 320 nm bis 480 nm und bevorzugt von 380 nm bis 420 nm zu absorbieren.

Die einzelnen, vorgenannten Bestandteile des flüssigen oder viskosen Materials im Verfahren gemäß (i) sind so wie oben in der Beschreibung angegeben, worauf hier ausdrücklich Bezug genommen wird, mit Ausnahme der Definition der Polysiloxan-Komponente als solcher. Diese hat zwar einerseits ebenfalls die oben angegebenen Eigenschaften, andererseits darf sie jedoch abweichend davon auch Silane mit nur einer hydrolytisch kondensierbaren Gruppe enthalten.

Die genannte Ausführungsform der Erfindung löst die Aufgabe, einen Formkörper bereitzustellen, dessen optische Eigenschaften und insbesondere dessen Transluzenz verbessert bzw. genauer eingestellt werden können und/oder der sich genauer drucken lässt, also eine nur geringe FD zeigt. Diesbezüglich kann auf die Details der Beschreibung verwiesen werden, soweit sie sich mit den Zusätzen beschäftigt, die in den drei Varianten dieses Verfahrens als Bestandteil des flüssigen oder viskosen Materials bzw. der Polysiloxan-Komponente enthalten sein müssen.

9. Weitere Ausführungsbeispiele

9.1 Verwendete Harzsysteme

Harzsystem 5 (siehe EP 0451709, EP 0450624):

Zur Vorlage von 0,47 g (0,744 mmol) Dibutylzinndilaurat als Kat. und 159,42 g (744,2 mmol) Glycerin-1,3-methacrylat-acrylat wird unter Sauerstoffatmosphäre 161,74 g (744,2 mmol) 3-Isocyanatopropylmethyldiethoxysilan zugetropft und bei 30 °C gerührt (ca. 21 h). Die Umsetzung kann über die Abnahme der Isocyanat-Konzentration mittels NMR und IR verfolgt werden. Nach Zugabe von Essigester (300 ml/mol Silan) und einer EtOH/$H_2$O-Lösung (Volumenverhältnis 1:1) mit $H_2$O zur Hydrolyse und HCl als Kat. wird bei 30 °C gerührt. Nach 30 Min wird 30,41 g (148,8 mmol) (Methacryloxymethyl)methyldimethoxysilan zugetropft. Die Aufarbeitung erfolgt nach mehrtägigem Rühren durch Neutralisation mit wässriger NaOH, Ausschütteln mit Wasser und Filtration über hydrophobierten Filter. Es wird BHT als Stabilisator gelöst. Danach wird zunächst abrotiert und anschließend mit Ölpumpenvakuum abgezogen. Es resultiert ein flüssiges Harz mit einer Viskosität von ≈ 81 Pa.s bei 25 °C sowie einer Brechzahl von $n_D$ ≈ 1,485.

Harzsystem 6 (siehe DE 102013108594):

Zur Vorlage von in 40 ml THF gelöstem Harzsystem 5 (15,8445 g; 40,725 mmol) und Diazabicycloundecen (0,0031 g; 0,020 mmol) als Kat. wird unter Argonatmosphäre 2,5290 g (20,363 mmol) Methylthiophenol zugegeben und bei 30 °C gerührt (ca.45 Min). Die Umsetzung kann über die Abnahme der Acrylat-Konzentration mittels NMR verfolgt werden. Die Aufarbeitung erfolgt z.B. durch Abrotieren des THF mit anschließender Fällung mit Wasser und Waschen mit Wasser. Danach werden 40 ml EE zugegeben mit anschließender Filtration über hydrophobierten Filter. Es wird zunächst abrotiert und anschließend mit Ölpumpenvakuum abgezogen. Es resultiert ein flüssiges Harz mit einer Viskosität von ≈ 185 Pa·s bei 25 °C sowie einer Brechzahl von $n_D$ ≈ 1,509.

Aufgrund der unterschiedlichen Reaktivitäten der Acrylatgruppe und Methacrylatgruppe ist eine selektive Addition an der Acrylatgruppe möglich.

9.2 Komposite

a) Nanohybridkomposite mit $ZrO_2$-NP, Dentalglaspartikeln und organischem Absorber

Komposit I: Zusammensetzung und Herstellung:

- Nanohybridkomposit mit $ZrO_2$-NP (silanisiert, Fa. Pixelligent, PixClear PCPB-2-50-ETA, Partikelgröße 7 - 10 nm) und Dentalglaspartikeln (silanisiert, Typ GM27884, Primärpartikeldurchmesser von 0,7 $\mu$m) ) im Verhältnis $ZrO_2$-NP : DGP = 1 : 4,95 und einen Gesamtfüllstoffgehalt von 56,5 Gew.-%.
- LTPO und TBT wurden zum Harzsystem 2 gegeben und anschließend die zu 50 Gew.-% in Ethylacetat dispergierten $ZrO_2$-NP ebenfalls zugegeben. Nach dem Lösen von Initiator und Absorber und nach vollständigem Dispergieren der Nanopartikel wurde das Lösemittel unter vermindertem Druck entfernt. Anschließend wurden die Dentalglaspartikel zugegeben und mittels Dreiwalzwerk homogen eingearbeitet.
- Konventionelle Stäbchenherstellung wie in Punkt 3.1 I. beschrieben.
- 3D-geruckte Stäbchen der Komposite I und II: Nachbehandlung der Stäbchen wie in Punkt 5.1 II. beschrieben.
- 3D-gedruckte Stäbchen der Harzsysteme 2, 5 und 6: Nachbehandlung der Stäbchen wie in Punkt 5.1 II. beschrieben.

Komposit II: Zusammensetzung und Herstellung:

- Nanohybridkomposit mit $ZrO_2$-NP (silanisiert, Fa. Pixelligent, PixClear PCPB-2-50-ETA, Partikelgröße 7 - 10 nm) und Dentalglaspartikel (silanisiert, Typ GM27884, Primärpartikeldurchmesser von 0,7 $\mu$m) ) im Verhältnis $ZrO_2$-NP : DGP = 1 : 1,71 und einen Gesamtfüllstoffgehalt von 47,5 Gew.-%.
- LTPO und TBT wurden zum Harzsystem 5 gegeben und anschließend die zu 50 Gew.-% in Ethylacetat dispergierten $ZrO_2$-NP ebenfalls zugegeben. Nach dem Lösen von Initiator und Absorber und nach vollständigem Dispergieren der Nanopartikel wurde das Lösemittel unter vermindertem Druck entfernt. Anschließend wurden die Dentalglaspartikel zugegeben und mittels Dreiwalzwerk homogen eingearbeitet.
- Konventionelle Stäbchenherstellung und Nachbehandlung der gedruckten Stäbchen wie bei Komposit I.

b) Makrokomposit mit Dentalglaspartikeln

Komposit III: Zusammensetzung und Herstellung:

- Makrokomposit mit Dentalglaspartikel (silanisiert, Typ GM27884, Primärpartikeldurchmesser von 0,7 $\mu$m) ) Füllstoffgehalt von 30 Gew.-%.
- LTPO wurde zum Harzsystem 4 gegeben und unter Rühren bei 35 °C gelöst. Anschließend wurden die Dentalglaspartikel zugegeben und mittels Dreiwalzwerk homogen eingearbeitet.
- Konventionelle Stäbchenherstellung wie bei Komposit I

Tabelle 1

(Anmerkung: Die Daten in der Tabelle beziehen sich auf die jeweilige Materialzusammensetzung in der linken Spalte. Abweichungen davon sind in der jeweiligen Spalte mit angegeben.)

| Materialsystem | LTPO/DBPO [Gew.-%] | Viskosität [Pas] 25 / 40 °C | Transluzenz [%] | Brechzahl unausgehärtet | Schichtstärke beim 3D-Druck [µm] | Belichtungszeit beim 3D-Druck [s] | $F_{max}$ [MPa] konv./3D-Druck | E-Modul [GPa] konv./3D-Druck |
|---|---|---|---|---|---|---|---|---|
| Harzsystem 2 | 2/0 | 31 / 6 *** | 83 * | 1,484 *** | 50 | 20 | 117 / 118 | 3,0 / 3,1 |
| Komposit I Nanohybridkomposit aus Harzsystem 2 mit 56,5 Gew.-% Füllstoff und TBT (0,0010 mmol/g Harz) | 1/0 | 322 / 59 | 71 ohne TBT | n.b. | 50 | 24 | 146 / 143 | 6,1 / 5,5 |
| Harzsystem 5 | 2/0 | 89 / 12 *** | 85 * | 1,485 *** | 50 | 20 | 110 / 119 | 3,4 / 3,8 |
| Komposit II Nanohybridkomposit aus Harzsystem 5 mit 47,5 Gew.-% Füllstoff und TBT (0,0010 mmol/g Harz) | 1/0 | 395 / 54 | 52 ohne TBT | n.b. | 50 | 24 | 129 / 135 | 5,0 / 5,4 |
| Harzsystem 6 | 1/0 | 185 / 23 *** | n.b. | 1,509 *** | - | - | 111 / n.b. | 2,8 / n.b. |
| Komposit III Nanohybridkomposit aus Harzsystem 6 mit 30 Gew.-% Füllstoff | 1/0 | 346 / 42 | 73 | n.b. | - | - | n.b. / n.b. | n.b. / n.b. |

* = mit 1 Gew.-% LTPO; *** = ohne Initiator

Die Transluzenz der Komposite wurde mittels Transluzenzplättchen untersucht. Es zeigte sich, dass Komposit II ohne TBT und insbesondere Komposit I ohne TBT bei einem hohen Gesamtfüllstoffgehalt eine sehr hohe Transluzenz aufwiesen. Ebenso zeigte Komposit III eine hohe Transluzenz. Diese konnte dadurch erreicht werden, dass die Brechzahl der Harzsysteme (entweder mittels $ZrO_2$-Nanopartikel (bei Komposit I und II) oder der Matrix selbst (bei Komposit III) an die Brechzahl der verwendeten Dentalglaspartikeln angepasst wurde. Zudem wurden Modellzähne 3D-gedruckt und nach der üblichen Nachbehandlung poliert. Dabei zeigte sich eine sehr gute Bauteilqualität (gute Oberflächenqualität, hohe Dimensionstreue, gute Polierbarkeit) bei den gedruckten Modellzähnen der Komposite I und II.

**Patentansprüche**

1.  Formkörper auf Basis eines organisch polymerisierten Kieselsäure(hetero)polykon-densats, welches durch organische Polymerisation einer Polysiloxan-Komponente erzeugt wurde, die unter hydrolytischer Kondensation eines oder mehrerer monomerer Silane mit ausschließlich zwei oder drei hydrolysierbaren Gruppen und mindestens einem organisch polymerisierbaren Rest, der über Kohlenstoff an das Siliciumatom gebunden ist, gebildet wurde, wobei der Formkörper erhältlich ist mit Hilfe eines strahlungsinduzierten Druckverfahrens nach der Technik des Ein-Photonen-Polymerisations-Prozesses, wobei

    - der Formkörper durch Verfestigen eines flüssigen oder viskosen Materials erzeugt wird, welches eine Polysiloxan-Komponente, die unter hydrolytischer Kondensation eines oder mehrerer monomerer Silane mit ausschließlich zwei oder drei hydrolysierbaren Gruppen und mindestens einem organisch polymerisierbaren Rest, der über Kohlenstoff an das Siliciumatom gebunden ist, gebildet wurde, und einen Initiator und/oder Katalysator für die strahlungsinduzierte Polymerisation des organisch polymerisierbaren Restes enthält, wobei das flüssige oder viskose Material ein Komposit ist, das anorganische Teilchen mit einem durchschnittlichen Primärpartikeldurchmesser von 0,1 bis 5 $\mu$m oder anorganische Teilchen in agglomerierter oder dispergierter Form mit einem durchschnittlichen Primärpartikeldurchmesser von 5 bis 100 nm oder anorganisch-organische Hybridpolymere oder faserförmige Füllstoffe oder organische Füllstoffe enthält, und
    - die Verfestigung dadurch erfolgt, dass Licht einer Strahlungsquelle auf einen Bereich einer Oberfläche eines Substrats gerichtet wird, wobei eine dort befindliche Schicht des flüssigen oder viskosen Materials durch die Einwirkung von Strahlung einer organischen Polymerisation unterworfen und dadurch verfestigt wird, worauf nacheinander weitere Schichten des flüssigen oder viskosen Materials, die sich jeweils auf der Schicht des zuletzt verfestigten Materials befinden, mit Hilfe dieser Strahlungsquelle verfestigt werden,

    wobei der Formkörper eine Biegefestigkeit, bestimmt mit einem 3-Punkt-Biegeversuch gemäß Prüfnorm DIN EN ISO 4049: 2009 mit der Universalprüfmaschine Z100 der Firma Zwick/Roell, mit den Änderungen, dass anstelle einer Wasserlagerung eine Trockenlagerung voranging und die Vorschubgeschwindigkeit 3 mm/Min betrug, von mindestens 60 MPa und/oder einen E-Modul, im linearen Bereich der Spannungs-Dehnungs-Kurve zwischen 10-20 MPa über die Sekante bestimmt, von mindestens 1,4 GPa aufweist.

2.  Formkörper nach Anspruch 1, der in einer Raumrichtung aus einzelnen Schichten mit einer Dicke im Bereich von 10 bis 150 $\mu$m aufgebaut ist oder bei dem die Schichten durch kontinuierliches Belichten entstanden sind.

3.  Formkörper nach Anspruch 1 oder 2 mit einer Biegefestigkeit von mindestens 100 MPa und einem E-Modul von mindestens 3,2 GPa.

4.  Formkörper nach einem der Ansprüche 1 bis 3 in Form eines Komposits, der neben dem organisch polymerisierten Kieselsäure(hetero)polykondensat mindestens einen Füllstoff enthält, ausgewählt unter Füllstoffen aus agglomerierten oder dispergierten anorganischen Nanopartikeln mit Partikelgrößen im Bereich von 5 bis 100 nm und Partikeln im Größenbereich von 150 nm bis 5 $\mu$m und Kombinationen davon, wobei der Füllstoffgehalt des Formkörpers bei mindestens 15 Gew.-%liegt und wobei der Formkörper eine Biegefestigkeit von mindestens 130 MPa und/oder einen E-Modul von mindestens 5,0 GPa aufweist.

5.  Formkörper nach Anspruch 4, der dispergierte anorganische Nanopartikel mit Partikelgrößen im Bereich von 5 bis 100 nm und Partikel im Größenbereich von 150 nm bis 5 $\mu$m enthält.

6.  Formkörper nach einem der Ansprüche 1 bis 5, der weiterhin ein Material aufweist, das in der Lage ist, Licht im Wellenlängenbereich von 320 nm bis 480 nm zu absorbieren.

7.  Verwendung eines Formkörpers nach einem der Ansprüche 1 bis 6 als temporärer oder dauerhafter Zahnersatz, als Prophylaxematerial, als Fissurenversiegler, als Zahnschiene für die Zahnkorrektur, als Zahnschutz/Mundschutz, als Schnarcherschiene, als Aufbissschiene oder als Knirscherschiene.

## Claims

**1.** A shaped body based on an organically polymerized silica (hetero)polycondensate which has been formed by organic polymerization of a polysiloxane component which has been produced by hydrolytic condensation of one or more monomeric silanes having exclusively two or three hydrolysable groups and at least one organically polymerizable radical being bonded to the silicon atom via carbon, wherein the shaped body is obtainable with the aid of a radiation-induced printing process according to the technique of the one-photon polymerization process, wherein

- the shaped body is produced by solidifying a liquid or viscous material which contains a polysiloxane component formed by hydrolytic condensation of one or more monomeric silanes having exclusively two or three hydrolyzable groups and at least one organically polymerizable radical being bonded to the silicon atom via carbon, and an initiator and/or catalyst for the radiation-induced polymerization of the organically polymerizable radical, wherein the liquid or viscous material is a composite containing inorganic particles having an average primary particle diameter of 0.1 to 5 $\mu$m or inorganic particles in agglomerated or dispersed form having an average primary particle diameter of 5 to 100 nm or inorganic-organic hybride polymers or fibrous additives or inorganic fillers, and
- the solidification is effected by directing light from a radiation source onto a region of a surface of a substrate, a layer of the liquid or viscous material located there being subjected to organic polymerization by the action of radiation and thereby solidified, whereupon further layers of the liquid or viscous material, each of which is located on the layer of the last solidified material, are successively solidified with the aid of this radiation source,

wherein the shaped body has a flexural strength, as determined with a 3-point flexural test according to test standard DIN EN ISO 4049: 2009 with the universal testing machine Z100 of the company Zwick/Roell, with the changes that instead of water storage a dry storage preceded and that the feed rate was 3 mm/min, of at least 60 MPa and/or a modulus of elasticity, as determined in the linear range of the stress-strain curve between 10-20 MPa over the secant, of at least 1.4 GPa.

**2.** The shaped body according to claim 1, which is built up in a spatial direction from individual layers with a thickness in the range from 10 to 150 $\mu$m or in which the layers have been formed by continuous exposure to light.

**3.** The shaped body according to claim 1 or 2 with a flexural strength of at least 100 MPa and a modulus of elasticity of at least 3.2 GPa.

**4.** The shaped body according to one of claims 1 to 3 in the form of a composite which, in addition to the organically polymerized silica (hetero)polycondensate, contains at least one filler selected from fillers consisting of agglomerated or dispersed inorganic nanoparticles having particle sizes in the range from 5 to 100 nm and particles in the size range from 150 nm to 5 $\mu$m and combinations thereof, wherein the filler content of the shaped body being at least 15 % by weight and wherein the shaped body has a flexural strength of at least 130 MPa and/or a modulus of elasticity of at least 5.0 GPa.

**5.** The shaped body according to claim 4, which contains dispersed inorganic nanoparticles with particle sizes in the range from 5 to 100 nm and particles in the size range from 150 nm to 5 $\mu$m.

**6.** The shaped body according to one of claims 1 to 5, which further comprises a material capable of absorbing light in the wavelength range from 320 nm to 480 nm.

**7.** The use of a shaped body according to one of claims 1 to 6 as a temporary or permanent dental prosthesis, as a prophylactic material, as a fissure sealant, as a dental splint for correcting teeth, as a tooth protector/mouthguard, as a snoring splint, as a bite splint or as a crunching splint.

## Revendications

**1.** Corps moulé à base d'un (hétéro)polycondensat d'acide silicique polymérisé par voie organique, qui a été produit par polymérisation organique d'un composant polysiloxane obtenu par condensation hydrolytique d'un ou de plusieurs silanes monomères comportant exclusivement deux ou trois groupes hydrolysables et au moins un résidu à polymérisation organique qui est lié à l'atome de silicium par l'intermédiaire de carbone, dans lequel le corps moulé peut être obtenu à l'aide d'un processus d'impression induit par rayonnement selon la technique du processus de polymérisation monophotonique, dans lequel le corps moulé est produit par durcissement d'une matière liquide ou visqueuse, laquelle contient un composant polysiloxane qui a été obtenu par condensation hydrolytique d'un ou de plusieurs silanes monomères comportant exclusivement deux ou trois groupes hydrolysables, et au moins un résidu à polymérisation organique qui est lié à l'atome de silicium par l'intermédiaire de carbone, et un initiateur et/ou un catalyseur pour la polymérisation induite par rayonnement du résidu à polymérisation organique, dans lequel la matière liquide ou visqueuse est un composite qui contient des particules inorganiques avec un diamètre moyen de particules primaires de 0,1 à 5 $\mu$m ou des particules inorganiques sous forme agglomérée ou dispersée avec un diamètre moyen de particules primaires de 5 à 100 nm ou des polymères hybrides inorganiques-inorganiques ou des charges fibreuses ou des charges organiques, et

- le durcissement est réalisé par la lumière d'une source de rayonnement qui est dirigée sur une zone d'une surface d'un substrat, une couche de matière liquide ou visqueuse qui s'y trouve étant soumise à une polymérisation organique par l'action du rayonnement est ainsi durcie, puis d'autres couches de matière liquide ou visqueuse qui se trouvent respectivement sur la couche de la dernière matière durcie sont ensuite durcies successivement à l'aide de cette source de rayonnement,

dans lequel le corps moulé présente une résistance à la flexion, définie par un essai de flexion à trois points selon la norme d'essai DIN EN ISO 4049:2009 avec la machine d'essai universelle Z100 de la société Zwick/Roell, modifiée de telle sorte qu'à la place d'un stockage d'eau un stockage sec est prévu et avec une vitesse d'alimentation de 3 mm/min, d'au moins 60 MPa et/ou un module d'élasticité, défini dans la zone linéaire de la courbe de contrainte-déformation entre 10 et 20 MPa sur la sécante, d'au moins 1,4 GPa.

**2.** Corps moulé selon la revendication 1, qui est dans la direction spatiale construit à partir de couches individuelles ayant une épaisseur comprise dans la plage de 10 à 150 $\mu$m ou dans lequel les couches sont générées par exposition continue.

**3.** Corps moulé selon la revendication 1 ou 2 avec une résistance à la flexion d'au moins 100 MPa et un module d'élasticité d'au moins 3,2 GPa.

**4.** Corps moulé selon une des revendications 1 à 3 sous la forme d'un composite qui, outre l'(hétéro)polycondensat d'acide silicique polymérisé par voie organique, contient au moins une charge choisie parmi des charges de nanoparticules inorganiques agglomérées ou dispersées avec des tailles de particules comprises dans la plage de 5 à 100 nm et des particules dans la classe granulométrique de 150 nm à 5 $\mu$m et des combinaisons de celles-ci, dans lequel la teneur en charge du corps moulé représente au moins 15 % en poids et dans lequel le corps moulé présente une résistance à la flexion d'au moins 130 MPa et/ou un module d'élasticité d'au moins 5,0 GPa.

**5.** Corps moulé selon la revendication 4, qui contient des nanoparticules inorganiques dispersées avec des tailles de particules comprises dans la plage de 5 à 100 nm et des particules dans la classe granulométrique de 150 nm à 5 $\mu$m.

**6.** Corps moulé selon une des revendications 1 à 5, qui présente en outre une matière qui est capable d'absorber la lumière dans la plage de longueur d'ondes de 320 nm à 480 nm.

**7.** Utilisation d'un corps moulé selon une des revendications 1 à 6, sous la forme d'une prothèse dentaire temporaire ou permanente, d'un matériau prophylactique, d'un scellement de fissures, d'une gouttière dentaire pour corriger les dents, d'un protège-dents/protège-bouche, d'une gouttière anti-ronflement, d'une gouttière anti-morsure ou d'une gouttière antibruxisme.

Modelldicke
$d_{mod} = 1,95$ mm

Modellhöhe
$h_{mod} = 7,93$ mm

3D-Druck +
Nachhärteprozess

Tatsächliche Dicke $d_{tat}$

© Fraunhofer ISC

Tatsächliche Höhe $h_{tat}$

Figur 1

Bauteilmodell

Bauteil

Plattform

z-Achse

Wandung des Badbehälters

gefülltes Materialbad

fehlerhafte Durchpolymerisierung

Lichtdurchlässiger Boden

zu belichtende Schicht

Licht

DLP-Projektor

3D-gedruckte Bauteil

Figur 2

EP 3 823 811 B1

Figur 3

| Initiator | LTPO + DBPO | | | LTPO + DBPO | | |
|---|---|---|---|---|---|---|
| Absorber | - | | | DHDMBP (1 Gew.-%) | | |
| Oberflächen-qualität | schlecht | schlecht | gut | gut | gut | gut |

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19950284 A1
- DE 102014116402 A1
- US 20160332367 A1
- EP 3090722 A1
- WO 2018058135 A
- DE 4011044
- DE 19627198
- DE 19910895
- DE 10349766
- DE 102005018059
- DE 4125201
- DE 102011054440 A1
- DE 102011053865 A1
- DE 102012109685 A1
- DE 102013108594
- DE 10201415751 A1
- DE 10111955
- DE 102011050672
- DE 1964378
- DE 10018405
- DE 102005061965
- EP 2846757 A1
- DE 4416857

**In der Beschreibung aufgeführte Nicht-Patentliteratur**

- **S. LIGON ; R. LISKA ; J. STAMPFL et al.** Polymers for 3D Printing and Customized Additive Manufacturing. *Chem. Rev.,* 2017, vol. 117, 10212-10290
- **G. WYPYCH.** Handbook of UV Degradation and Stabilization. ChemTec Publishing, 2015
- **I. K. LUTSKAYA ; N. V. NOVAK et al.** Fluoreszenz von Zahnhartsubstanz und Füllungsmaterialien. *ZMK,* 2011, vol. 27, 12
- **G. WYPYCH.** Handbook of UV Degradation and Stabilization. ChemTec Publishing, 2015, vol. 34, 43-46